# EUROPEAN PATENT SPECIFICATION

(11) **EP 3 778 765 B1**
(45) Date of publication and mention of the grant of the patent: **28.08.2024**
(21) Application number: 19775340.3
(22) Date of filing: 28.03.2019
(51) Int. Cl.: C08L 51/04, C08J 3/12, C08L 63/00, C08L 101/00, C08F 279/02, C08L 9/00, C08L 101/12, C08F 265/06, C08F 285/00, C08L 51/00

(54) **POWDER/GRANULAR MATERIAL HAVING IMPROVED DISPERSIBILITY IN THERMOSETTING MATRIX RESIN**
PULVER-/GRANULATFÖRMIGES MATERIAL MIT VERBESSERTER DISPERGIERBARKEIT IN WÄRMEHÄRTENDEM MATRIXHARZ
SUBSTANCE PULVÉRULENTE/GRANULAIRE PRÉSENTANT UNE DISPERSIBILITÉ AMÉLIORÉE DANS UNE RÉSINE DE MATRICE THERMODURCISSABLE

(30) Priority: 30.03.2018 JP 2018069410
(43) Date of publication of application: 17.02.2021
(73) Proprietor: Kaneka Corporation, Osaka-shi, Osaka 530-8288 (JP)
(72) Inventor: MAIZURU, Nobuyoshi, Takasago-shi, Hyogo 676-8688 (JP)
(74) Representative: Vossius & Partner Patentanwälte Rechtsanwälte mbB
(86) International application number: PCT/JP2019/013710
(87) International publication number: WO 2019/189621

(56) References cited:
- WO-A1-2004/108825
- WO-A1-2009/034966
- JP-A- 2002 146 214
- JP-A- 2015 218 317
- JP-A- 2018 500 441
- US-A1- 2007 251 419
- US-A1- 2017 362 395
- US-A1- 2018 002 520

## Description

### Technical Field

The present invention relates to a powdery and/or granular material for thermosetting resin. The powdery and/or granular material contains fine polymer particles and is capable of being efficiently dispersed in a thermosetting matrix resin.

### Background Art

Thermosetting resins have various kinds of excellent properties such as high heat resistance and high mechanical strength, and therefore are used in various fields. Out of the thermosetting resins, epoxy resins are used as matrix resins in a wide variety of applications such as, for example, sealants for electronic circuits, paints, adhesives, and fiber-reinforced materials. The epoxy resins have excellent heat resistance, chemical resistance, insulating properties, and the like, but are insufficient in impact resistance which is characteristic of thermosetting resins. One widely used method to improve the impact resistance of an epoxy resin is to add an elastomer to the epoxy resin.

Examples of the elastomer encompass fine polymer particles having a multilayer structure. However, cross-linked fine polymer particles smaller than 1 pm are very difficult to disperse in an epoxy resin on an industrial scale. For example, in a case where a powdery and/or granular material, whose particle(s) is/are each made up of cross-linked fine polymer particles having a primary particle size less than 1 pm (such a powdery and/or granular material is also called secondary particle(s)) (specifically, a powdery and/or granular material consisting of general multilayer fine polymer particles and having a secondary particle size of not less than 1 pm) is mixed mechanically with an epoxy resin, the mixing itself is easy. However, the fine polymer particles remain agglutinated together in the resulting mixture, and therefore the toughness and impact resistance of a product obtained by curing the mixture are not improved much and the surface appearance of the product is very poor.

To address such issues, some techniques have been disclosed. For example, Patent Literature 1 discloses a technique to obtain a resin composition by mixing a polymer composition and a liquid epoxy resin (which corresponds to a thermosetting matrix resin in the present specification). The polymer composition, which is used here as a masterbatch, is obtained by mixing fine polymer particles and a solid epoxy resin and making it into powder form. This technique improves the dispersibility of fine polymer particles into an epoxy resin.

Patent Literature 2 discloses a polymer composition that includes (i) a polymer (P1) and (ii) a polymer obtained by a multistage process with: (a) one stage (A) including a polymer (A1) having a glass transition temperature of less than 10°C, (b) one stage (B) including a polymer (B1) having a glass transition temperature of at least 60°C, and (c) one stage (C) including a polymer (C1) having a glass transition temperature of at least 30°C.

Patent Literature 3 discloses a polymer composition that contains a (meth)acrylic polymer (P1) and a multistage polymer, in which the multistage polymer makes up at least 20 weight% of the polymer composition.

JP 2002 146 214 A discloses a functional liquid-solid additive system which comprises a functional liquid component and a functional solid component, wherein the functional liquid component comprises a functional liquid additive particle, while the functional solid component comprises a mass of two or more polymer particles.

US 2017/0362395 A1 discloses a polymer composition comprising an epoxy resin and a multistage polymer, a polymer composition comprising an epoxy resin and a multistage polymer that can be used as a masterbatch, and a process for preparing a polymer composition comprising an epoxy resin and a multistage polymer by spray drying or coagulation.

### Citation List

### [Patent Literature]

[Patent Literature 1]
   PCT International Publication No. WO2016/102658
[Patent Literature 2]
   PCT International Publication No. WO2016/102682
[Patent Literature 3]
   PCT International Publication No. WO2016/102666

### Summary of Invention

### Technical Problem

The foregoing conventional techniques, however, are insufficient in terms of the dispersibility of fine polymer particles into a thermosetting matrix resin, and still have some room for improvement.

An embodiment of the present invention was made in view of the above circumstances, and an object thereof is to solve, by using a resin having a viscosity of not more than 1,000,000 mPa·s at 25°C, the foregoing issue that arises when a powdery and/or granular material containing fine polymer particles is mixed into a thermosetting matrix resin which is flowable when mixed with the powdery and/or granular material.

### Solution to Problem

The inventor of the present invention conducted diligent research, and found that the foregoing object can be attained by employing the following powdery and/or granular material for thermosetting resin. Specifically, the powdery and/or granular material for thermosetting resin contains specific fine polymer particles and a resin having a specific viscosity. On the basis of this finding, the inventor accomplished the present invention. The invention is defined by the independent claims. The dependent claims define preferred embodiments.

An embodiment of the present invention relates to a powdery and/or granular material for thermosetting resin, including: fine polymer particles (A) having a polymer grafted therein, the polymer containing at least one type of monomer unit selected from the group consisting of aromatic vinyl monomers, vinyl cyanide monomers, and (meth)acrylate monomers; and a resin (B) having a viscosity of not more than 1,000,000 mPa·s at 25°C, in which the fine polymer particles (A) are contained in an amount of 70 weight% to 99 weight% and the resin (B) is contained in an amount of 1 weight% to 30 weight%, where 100 weight% represents a total amount of the fine polymer particles (A) and the resin (B), the fine polymer particles (A) have a core-shell structure including a core layer and a shell layer; and the fine polymer particles (A) include, in the core layer, a polymer that contains at least one type of monomer unit selected from the group consisting of diene-based rubbers, (meth)acrylate-based rubbers, and organosiloxane-based rubbers.

Another embodiment of the present invention relates to a method of producing a powdery and/or granular material for thermosetting resin, the method including: i) adding a resin (B) to an aqueous latex that contains fine polymer particles (A); ii) preparing, with use of the aqueous latex obtained in step i), an agglutinate that contains the fine polymer particles (A) and the resin (B); and iii) collecting the agglutinate, in which the fine polymer particles (A) include a graft part which is a polymer containing structural units derived from at least one type of monomer selected from the group consisting of aromatic vinyl monomers, vinyl cyanide monomers, and (meth)acrylate monomers, the resin (B) has a viscosity of not more than 1,000,000 mPa·s at 25°C, and the fine polymer particles (A) are contained in an amount of 70 weight% to 99 weight% and the resin (B) is contained in an amount of 1 weight% to 30 weight%, where 100 weight% represents a total amount of the fine polymer particles (A) and the resin (B), the fine polymer particles (A) have a core-shell structure including a core layer and a shell layer; and the fine polymer particles (A) include, in the core layer, a polymer that contains at least one type of monomer unit selected from the group consisting of diene-based rubbers, (meth)acrylate-based rubbers, and organosiloxane-based rubbers.

A further embodiment of the present disclosure a relates to a method of producing a powdery and/or granular material for thermosetting resin, the method including: i) forming a resin (B) in an aqueous latex that contains fine polymer particles (A); ii) preparing, with use of the aqueous latex obtained in step i), an agglutinate that contains the fine polymer particles (A) and the resin (B); and iii) collecting the agglutinate, in which the fine polymer particles (A) include a graft part which is a polymer containing structural units derived from at least one type of monomer selected from the group consisting of aromatic vinyl monomers, vinyl cyanide monomers, and (meth)acrylate monomers, the resin (B) has a viscosity of not more than 1,000,000 mPa·s at 25°C, and the fine polymer particles (A) are contained in an amount of 70 weight% to 99 weight% and the resin (B) is contained in an amount of 1 weight% to 30 weight%, where 100 weight% represents a total amount of the fine polymer particles (A) and the resin (B).

### Advantageous Effects of Invention

A powdery and/or granular material for thermosetting resin, in accordance with an embodiment of the present invention, provides the following effect: the powdery and/or granular material is well dispersible in a thermosetting matrix resin and therefore is easy to mix with the thermosetting matrix resin.

### Brief Description of Drawings

Fig. 1 is a TEM image of a powdery and/or granular material for thermosetting resin of Example 1.
Fig. 2 is a TEM image of a powdery and/or granular material for thermosetting resin of Comparative Example 1.

### Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment or example derived by combining technical means disclosed in differing embodiments and Examples. Further, it is possible to form a new technical feature by combining the technical means disclosed in various embodiments. All academic and patent documents cited in the present specification are incorporated herein by reference.

Any numerical range expressed as "A to B" in the present specification means "not less than A and not more than B (i.e., a range from A to B which includes both A and B)" unless otherwise stated.

Furthermore, in the present specification, a copolymer containing, as structural units, a structural unit derived from monomer X₁, a structural unit derived from monomer X₂, ... , and a structural unit derived from monomer X*ₙ* (where *n* is an integer of 2 or more) may be referred to as "X₁/X₂/ ... /X*ₙ* copolymer", unless otherwise stated. Such a X₁/X₂/ ... /X*ₙ* copolymer is not particularly limited as to the manner in which the structural units thereof are arranged, unless otherwise stated. The X₁/X₂/ ... /X*ₙ* copolymer may be a random copolymer, a block copolymer, or a graft copolymer.

### [1. Technical idea of an embodiment of the present invention]

The inventor of the present invention conducted a diligent research, and found that conventional techniques have some room for improvement or have issues as described below.

In Examples disclosed in Patent Literature 1, the polymer composition containing fine polymer particles contains a solid epoxy resin in an amount of about 70 weight%. According to the technique of Patent Literature 2, the polymer (C1) has a glass transition temperature of at least 30°C, and therefore it is inferred that the polymer (C1) is in its solid state at 25°C. In the technique of Patent Literature 3, it is inferred that the (meth)acrylic polymer (P1) disclosed in Examples is in its solid state. Therefore, in a case where the polymer composition disclosed in any of Patent Literatures 1 to 3 is mixed into a liquid epoxy resin, the resulting resin composition would contain a large amount of solid epoxy resin or solid polymer. The inventor novelly found that a resin composition containing a large amount of solid epoxy resin or solid polymer has poor physical properties such as increased viscosity. The inventor also novelly found that, because solid epoxy resin or solid polymer is difficult to mix with a thermosetting resin (e.g., liquid epoxy resin), a polymer composition containing a large amount of solid epoxy resin or solid polymer requires much time and much heat to be mixed with a thermosetting resin.

In view of this, an object of an embodiment of the present invention is to provide a powdery and/or granular material that contains fine polymer particles which are capable of being well dispersed in a thermosetting matrix resin.

Furthermore, the inventor novelly found that according to the techniques disclosed in Patent Literatures 1 to 3, only a limited amount of fine polymer particles can be added to a resin composition, and therefore the toughness and impact resistance of the resulting cured product are not improved sufficiently.

In view of above, an object of another embodiment of the present invention is, by increasing the concentration of fine polymer particles in a powdery and/or granular material, to improve the toughness and/or impact resistance of the product obtained by curing a resin composition which is a mixture of the powdery and/or granular material and a thermosetting matrix resin, while reducing the effects on various physical properties.

### [2. Powdery and/or granular material which contains fine polymer particles (A) and resin (B)]

A powdery and/or granular material for thermosetting resin, in accordance with an embodiment of the present invention, contains fine polymer particles (A) and a resin (B). The fine polymer particles (A) have a polymer grafted therein, the polymer containing at least one type of monomer unit selected from the group consisting of aromatic vinyl monomers, vinyl cyanide monomers, and (meth)acrylate monomers. The resin (B) has a viscosity of not more than 1,000,000 mPa·s at 25°C. The fine polymer particles (A) are contained in the powdery and/or granular material in an amount of 70 weight% to 99 weight% and the resin (B) is contained in the powdery and/or granular material in an amount of 1 weight% to 30 weight%, where 100 weight% represents the total amount of the fine polymer particles (A) and the resin (B). The powdery and/or granular material for thermosetting resin, in accordance with an embodiment of the present invention, may be hereinafter referred to as "powdery and/or granular material" for short. The powdery and/or granular material, which has the above feature, is therefore advantageous in that the powdery and/or granular material is well dispersible in a thermosetting resin (e.g., thermosetting matrix resin which will be described later).

A "powdery and/or granular material" in accordance with an embodiment of the present invention contains fine polymer particles (A) and a resin (B). The powdery and/or granular material is dispersed into a thermosetting matrix resin (C) (described later) to form a resin composition. The resin composition is cured to give a cured product.

In the present specification, the term "powdery and/or granular material" refers to a material which can be powder and/or granule(s) and which is made up of powder particle(s), grain(s), and/or the like. In a case where a specific distinction is made between "granules" and "powder", the "granules" have a volume-average particle size of 0.1 mm to 10 mm, whereas the "powder" has a volume-average particle size of 0.01 mm to 0.1 mm. The "volume-average particle size" less than 10 pm can be measured with use of a dynamic light scattering (DLS) particle size distribution analyzer Nanotrac WaveII-EX150 (manufactured by MicrotracBEL Corp.), and "volume-average particle size" equal to or more than 10 pm can be measured with use of a laser diffraction particle size distribution analyzer Microtrac MT3000II (manufactured by MicrotracBEL Corp.).

Powder that contains the fine polymer particles (A) and the resin (B), before subjected to drying or after subjected to drying, may be formed into granules such as pellets with use of an apparatus such as an extruder. When the powder is formed into pellets, some other resin may be mixed as necessary.

The fine polymer particles (A) have a polymer grafted therein, the polymer containing at least one type of monomer unit selected from the group consisting of aromatic vinyl monomers, vinyl cyanide monomers, and (meth)acrylate monomers. The resin (B) has a viscosity of not more than 1,000,000 mPa·s at 25°C.

In other words, the fine polymer particles (A) include a graft part which is a polymer containing structural units derived from at least one type of monomer selected from the group consisting of aromatic vinyl monomers, vinyl cyanide monomers, and (meth)acrylate monomers.

The powdery and/or granular material can contain, in order to show its properties, the fine polymer particles (A) in an amount of 50 weight% to 99 weight% and the resin (B) in an amount of 1 weight% to 50 weight%, where 100 weight% represents the total amount of the fine polymer particles (A) and the resin (B).

In terms of achieving anti-blocking property, the powdery and/or granular material contains the fine polymer particles (A) in an amount of 70 weight% to 99 weight% and the resin (B) in an amount of 1 weight% to 30 weight%, more preferably contains the fine polymer particles (A) in an amount of 80 weight% to 99 weight% and the resin (B) in an amount of 1 weight% to 20 weight%, even more preferably contains the fine polymer particles (A) in an amount of 90 weight% to 99 weight% and the resin (B) in an amount of 1 weight% to 10 weight%, most preferably contains the fine polymer particles (A) in an amount of 95 weight% to 99 weight% and the resin (B) in an amount of 1 weight% to 5 weight%, where 100 weight% represents the total amount of the fine polymer particles (A) and the resin (B).

In terms of achieving the dispersibility of the powdery and/or granular material into a thermosetting matrix resin (C) (described later) (such dispersibility may be hereinafter referred to as "dispersibility" for short), the powdery and/or granular material can contain the fine polymer particles (A) in an amount of 60 weight% to 95 weight% and the resin (B) in an amount of 5 weight% to 40 weight%, more preferably contains the fine polymer particles (A) in an amount of 60 weight% 90 weight% and the resin (B) in an amount of 10 weight% to 40 weight%, even more preferably contains the fine polymer particles (A) in an amount of 60 weight% to 85 weight% and the resin (B) in an amount of 15 weight% 40 weight%, most preferably contains the fine polymer particles (A) in an amount of 60 weight% 80 weight% and the resin (B) in an amount of 20 weight% to 40 weight%, where 100 weight% represents the total amount of the fine polymer particles (A) and the resin (B).

It is preferable that, in the powdery and/or granular material for thermosetting resin in accordance with an embodiment of the present invention, the number of domains in each of which the longitudinal dimension of the resin (B) is not less than 1.5 times the average particle size of the fine polymer particles (A) is not more than five. The domains are measured by transmission electron microscopy (TEM). A transmission electron microscope (TEM) image of the powdery and/or granular material for thermosetting resin can be obtained by a method described later.

For the fine polymer particles (A) to be prevented from fusing together, it is preferable that, in the transmission electron microscope (TEM) image of the powdery and/or granular material obtained by the method described later, the number of domains in each of which the longitudinal dimension of the resin (B) is not less than 1.5 times the average particle size of the fine polymer particles (A) is not more than five, more preferably not more than three, even more preferably not more than one, most preferably not more than zero.

The phrase "the number of domains in each of which the longitudinal dimension of the resin (B) is not less than 1.5 times the average particle size of the fine polymer particles (A) is not more than zero in the transmission electron microscope (TEM) image" means that the transmission electron microscope (TEM) image contains no domains in each of which the longitudinal dimension of the resin (B) is not less than 1.5 times the average particle size of the fine polymer particles (A).

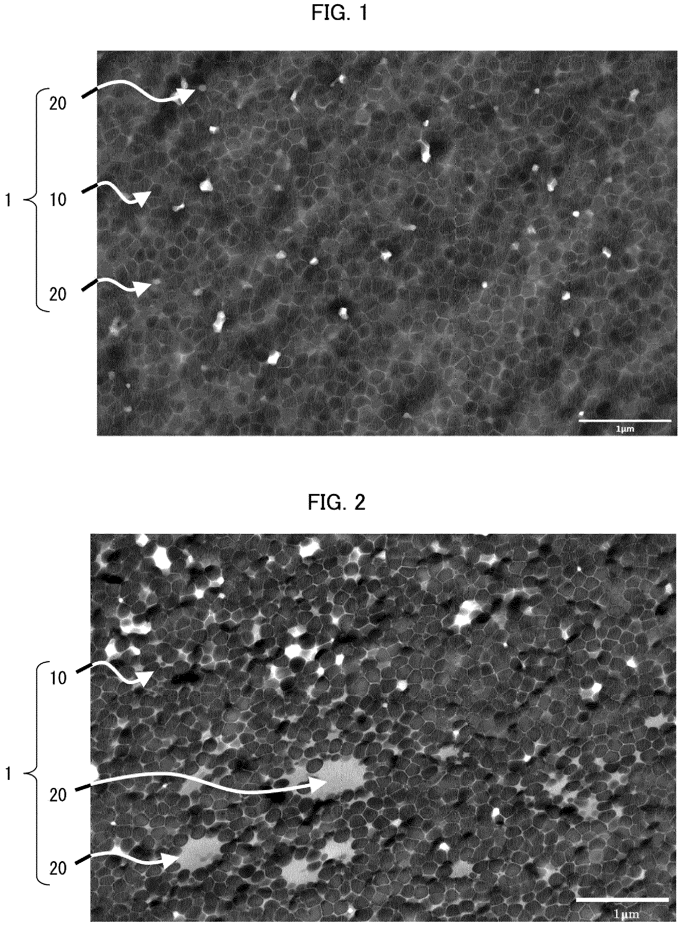

Fig. 1 is a TEM image of a powdery and/or granular material of Example 1, obtained by the method described later. Fig. 2 is a TEM image of a powdery and/or granular material of Comparative Example 1, obtained by the method described later. The TEM images (×40,000) of Figs. 1 and 2 each show a cross section of the powdery and/or granular material 1. In each of the images, the fine polymer particles (A) are black areas 10 substantially in spherical form or polygonal form, whereas domains of the resin (B) are gray areas 20 other than the fine polymer particles (A). Note that white areas in the images are areas where both the fine polymer particles (A) and the resin (B) are absent.

The "longitudinal dimension" of the resin (B) refers to the longest dimension of a gray area 20 (other than the fine polymer particles (A)) in a TEM image, i.e., the longest straight line connecting two points on the circumference of the gray area.

The "average particle size" of the fine polymer particles (A) refers to the average of diameters of virtual circles equal in area to the projections (such diameters are area-equivalent circle diameters) of randomly selected thirty fine polymer particles (A) in a TEM image.

Specifically, the "average particle size of the fine polymer particles (A)" refers to, in a TEM image, the average of diameters of virtual circles which are equal in area to the respective randomly selected thirty black areas 10 substantially in spherical or polygonal form.

In terms of achieving anti-blocking property and improving the dispersibility in the thermosetting matrix resin (C), the powdery and/or granular material preferably further contains an anti-blocking agent. The anti-blocking agent is not particularly limited, provided that the foregoing effect is provided. Examples of the anti-blocking agent encompass: (i) anti-blocking agents composed of inorganic fine particles, such as fine particles of silicon dioxide, titanium oxide, aluminum oxide, zirconium oxide, aluminum silicate, diatomaceous earth, zeolite, kaolin, talc, calcium carbonate, calcium phosphate, barium sulfate, or magnesium hydrosilicate; (ii) anti-blocking agents composed of organic fine particles; and (iii) fat-based and/or oil-based anti-blocking agents such as polyethylene wax, higher fatty acid amides, metal soap, and silicone oil. Out of such anti-blocking agents, anti-blocking agents composed of fine particles (inorganic fine particles or organic fine particles) are preferred, anti-blocking agents composed of organic fine particles are more preferred. The anti-blocking agent is particularly preferably an anti-blocking agent composed of organic fine particles of a polymer that contains at least one type of monomer unit selected from the group consisting of aromatic vinyl monomers, vinyl cyanide monomers, and (meth)acrylate monomers.

In other words, the anti-blocking agent is particularly preferably an anti-blocking agent composed of organic fine particles of a polymer containing structural units derived from at least one type of monomer selected from the group consisting of aromatic vinyl monomers, vinyl cyanide monomers, and (meth)acrylate monomers.

An anti-blocking agent composed of fine particles, in general, is in the form of a dispersion composed of the fine particles and a medium in which the particles are dispersed or is in the form of a colloid. The fine particles in the anti-blocking agent have a volume-average particle size (Mv) of usually not greater than 10 pm, preferably 0.05 pm to 10 pm. The amount of the anti-blocking agent with respect to the total weight of the powdery and/or granular material is preferably 0.01 weight% to 5.0 weight%, more preferably 0.5 weight% to 3.0 weight%.

The powdery and/or granular material for thermosetting resin, in accordance with an embodiment of the present invention, preferably further contains an anti-blocking agent in an amount of 0.01 weight% to 5.0 weight%. This makes it possible to further improve the dispersibility in the thermosetting matrix resin (C) and the anti-blocking property.

The powdery and/or granular material may contain, as necessary, one or more additives such as an antioxidant, a thermal stabilizer, a ultraviolet ray absorbing agent, a pigment, an antistatic agent, a lubricant, and/or the like.

The anti-blocking agent and one or more additives can be added during any step of a method of production of the powdery and/or granular material. For example, the anti-blocking agent and one or more additives can be added to an aqueous suspension before or after flocculation of the fine polymer particles (A). Alternatively, the anti-blocking agent and one or more additives can be added by directly mixing with the fine polymer particles (A) or the powdery and/or granular material.

### <2-1. Fine polymer particles (A)>

The fine polymer particles (A) have a volume-average particle size (Mv) of preferably 0.05 pm to 1 pm, more preferably 0.1 pm to 0.8 pm, in order that a suitably viscous, highly stable thermosetting resin is obtained when the fine polymer particles (A) are dispersed in the thermosetting matrix resin (C). The fine polymer particles (A) have a volume-average particle size (Mv) of even more preferably 0.2 pm to 0.8 pm in terms of the dispersibility in a thermosetting resin.

The fine polymer particles (A) in the powdery and/or granular material have a core-shell structure including a core layer and a shell layer.

More specifically, the fine polymer particles (A) preferably have a core-shell structure that includes at least the following two layers: a core layer located inside the particle; and a shell layer which is the outermost part of the particle. In terms of achieving dispersibility, the fine polymer particles (A) preferably have an intermediate layer between the core layer and the shell layer. The intermediate layer, which covers the core layer, thereby reduces the exposed area of the core layer of the fine polymer particles (A). It is inferred that, with this, core layers are less likely to adhere together and therefore dispersibility improves.

The core layer may either be an elastic or inelastic body, and is preferably an elastic body having a glass transition temperature below 0°C. The fine polymer particles (A) more preferably are fine polymer particles obtained by, in the presence of the core layer made of an elastic body (hereinafter may be referred to as "elastic core layer" for short), grafting a graft copolymerizable monomer component onto the core layer (carrying out graft copolymerization) to form a shell layer. In a case where this arrangement is employed, the fine polymer particles (A) have the following structure: an elastic core layer located inside the particle; and at least one shell layer that is graft copolymerized to the surface of the elastic core layer and that entirely or partially covers the elastic core layer.

In the present specification, the term "graft copolymerization" refers to the following polymerization reaction: a reaction between a monomer that will form a shell layer and one or more functional groups on the surface of an elastic core layer results in covalent bonding between the shell layer and the elastic core layer.

The particle-number-based distribution of particle size of the fine polymer particles (A) in the thermosetting matrix resin (C) preferably has a full width at half maximum which is not less than 0.5 times and not more than 1 time the volume-average particle size (Mv), because the resulting resin composition has a low viscosity and is easy to handle.

### (2-1-1. Core layer)

The core layer is preferably an elastic core layer having properties as a rubber, in order to increase the toughness of the cured product of the resin composition. In terms of achieving properties as a rubber, the gel content of the elastic core layer in accordance with an embodiment of the present invention is preferably not less than 60 weight%, more preferably not less than 80 weight%, even more preferably not less than 90 weight%, particularly preferably not less than 95 weight%.

Note that herein, "gel content" refers to a percentage found by (i) immersing, in 100 g of methyl ethyl ketone (hereinafter may be referred to as "MEK"), 0.5 g of crumbs (powdery and/or granular material) obtained by flocculation and drying of the fine polymer particles (A), (ii) allowing the crumbs to stand immersed for 24 hours at 23°C, (iii) separating the part that is soluble in the MEK from the part that is insoluble in the MEK, and (iv) determining the ratio of the insoluble part to the combined amount of the insoluble and soluble parts.

In an embodiment of the present invention, the core layer of the fine polymer particles (A) includes a polymer that contains at least one type of monomer unit selected from the group consisting of diene-based rubbers, (meth)acrylate-based rubbers, and organosiloxane-based rubbers. An organosiloxane-based rubber is also referred to as "polysiloxane rubber-based elastic body".

Examples of a polymer that is able to form an elastic core layer having properties as a rubber encompass (i) natural rubber, (ii) a rubber elastic body containing (a) 50 weight% to 100 weight% of at least one type of monomer (also referred to as "first monomer") selected from the group consisting of diene-based monomers (also referred to as "conjugated diene-based monomers") and (meth)acrylate-based monomers and (b) 0 weight% to 50 weight% of another monomer which is a vinyl-based monomer (also referred to as "second monomer") that is copolymerizable with the first monomer, (iii) a polysiloxane rubber-based elastic body, and (iv) a combination of any of these.

A rubber elastic body obtained by polymerizing a monomer mixture containing (a) 50 weight% to 100 weight% of at least one type of monomer selected from the group consisting of diene-based monomers and (b) 0 weight% to 50 weight% of another monomer which is a vinyl-based monomer that is copolymerizable with a diene-based monomer is also referred to as a "diene-based rubber".

A rubber elastic body obtained by polymerizing a monomer mixture containing (a) 50 weight% to 100 weight% of at least one type of monomer selected from the group consisting of (meth)acrylate-based monomers and (b) 0 weight% to 50 weight% of another monomer which is vinyl-based monomer that is copolymerizable with a (meth)acrylate-based monomer is also referred to as a "(meth)acrylate-based rubber".

The elastic core layer is preferably a diene-based rubber which uses a diene-based monomer, in that such a material (i) has a large effect of improving the toughness of the resulting cured product, (ii) has a large effect of improving impact-peel-resistant adhesiveness, and (iii) has a low affinity with the thermosetting resin, which makes it difficult for viscosity to increase with time due to swelling of the core layer. The elastic core layer is preferably a (meth)acrylate-based rubber which uses a (meth)acrylate-based monomer, in that such a material enables wide-ranging polymer design by combination of a plurality of monomers. In a case where it is desirable to increase impact resistance at low temperatures without decreasing the heat resistance of the cured product, an elastic core layer is preferably a polysiloxane rubber-based elastic body. Note that, herein, "(meth)acrylate" means acrylate and/or methacrylate.

Examples of a first monomer (i.e., conjugated diene-based monomer) which is a constituent of a diene-based rubber for use in the elastic core layer encompass 1,3-butadiene, isoprene (2-methyl-1,3-butadiene), and 2-chloro-1,3-butadiene. Such diene-based monomers may be used alone or in combination of two or more. In the present specification, the phrase "monomer which is a constituent of a rubber" refers to "monomer that can give a rubber when polymerized".

The elastic core layer is preferably (i) butadiene rubber which uses 1,3-butadiene or (ii) butadiene-styrene rubber which is a copolymer of 1,3-butadiene and styrene, in that such materials (a) have a large effect of improving the toughness, (b) have a large effect of improving impact-peel-resistant adhesiveness, and (c) have a low affinity with the matrix resin, which makes it difficult for viscosity to increase with time due to swelling of the core layer. In terms of these effects, butadiene rubber is more preferable. Butadiene-styrene rubber is more preferable in that butadiene-styrene rubber makes it possible to increase the transparency of the resulting cured product by adjusting refractive index.

Examples of a first monomer which is a constituent of a (meth)acrylate-based rubber for use in the elastic core layer encompass: (i) alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate, (ii) aromatic ring-containing (meth)acrylates such as phenoxyethyl (meth)acrylate and benzyl (meth)acrylate, (iii) hydroxyalkyl (meth)acrylates such as 2-hydroxyethyl (meth)acrylate and 4-hydroxybutyl (meth)acrylate, (iv) glycidyl (meth)acrylates such as glycidyl (meth)acrylate and glycidyl alkyl (meth)acrylate, (v) alkoxy alkyl (meth)acrylates, (vi) allyl alkyl (meth)acrylates such as allyl (meth)acrylate and allyl alkyl (meth)acrylate, and (vii) polyfunctional (meth)acrylates such as monoethylene glycol di(meth)acrylate, triethylene glycol di(meth)acrylate, and tetraethylene glycol di(meth)acrylate. Such (meth)acrylate-based monomers may be used alone or in combination of two or more. Ethyl (meth)acrylate, butyl (meth)acrylate, and 2-ethylhexyl (meth)acrylate are particularly preferable as the (meth)acrylate-based monomer.

Examples of the vinyl-based monomer (i.e., second monomer) that is copolymerizable with the first monomer encompass (i) vinyl arenes such as styrene, α-methylstyrene, monochlorostyrene, and dichlorostyrene, (ii) vinyl carboxylic acids such as acrylic acid and methacrylic acid, (iii) vinyl cyanides such as acrylonitrile and methacrylonitrile, (iv) vinyl halides such as vinyl chloride, vinyl bromide, and chloroprene, (v) vinyl acetate, (vi) alkenes such as ethylene, propylene, butylene, and isobutylene, and (vii) polyfunctional monomers such as diallylphthalate, triallyl cyanurate, triallyl isocyanurate, and divinylbenzene. Styrene is particularly preferable in that styrene makes it possible to easily increase refractive index. Such vinyl-based monomers may be used alone or in combination of two or more.

Example of the polysiloxane rubber-based elastic body that is able to form the elastic core layer encompass (i) polysiloxane-based polymers composed of alkyl or aryl disubstituted silyloxy units, such as dimethylsilyloxy, diethylsilyloxy, methylphenylsilyloxy, diphenylsilyloxy, and dimethylsilyloxy-diphenylsilyloxy, and (ii) polysiloxane-based polymers composed of alkyl or aryl monosubstituted silyloxy units, such as organohydrogensilyloxy in which some of sidechain alkyls have been substituted with a hydrogen atom. Such polysiloxane-based polymers may be used alone or in combination of two or more. Out of these examples, dimethylsilyloxy, methylphenylsilyloxy, and dimethylsilyloxy-diphenylsilyloxy are preferable because they can provide heat resistance to the cured product. Dimethylsilyloxy is most preferable because it can be easily acquired and is economical.

In an aspect in which the elastic core layer is formed from a polysiloxane rubber-based elastic body, a polysiloxane-based polymer part is preferably contained in an amount of not less than 80 weight%, more preferably not less than 90 weight%, where 100 weight% represents the entirety of the elastic body, in order to avoid a deterioration in the heat resistance of the cured product.

The core layer preferably has a crosslinked structure introduced in its polymer component obtained by polymerizing the foregoing monomers and in its polysiloxane-based polymer component, in order to maintain stable dispersion of the fine polymer particles (A) in the thermosetting matrix resin (C). A generally known method may be used to introduce the crosslinked structure.

Examples of methods for introducing a crosslinked structure into the polymer component obtained by polymerizing the foregoing monomers encompass a method in which a crosslinking monomer(s), such as a polyfunctional monomer and/or a mercapto group-containing compound, is/are added to the polymer component, and then polymerization is carried out. Examples of methods of introducing a crosslinked structure into a polysiloxane-based polymer encompass (i) a method that involves also partially using a polyfunctional alkoxysilane compound during polymerization, (ii) a method that involves introducing into the polysiloxane-based polymer a reactive group, such as a reactive vinyl group or a mercapto group, and thereafter adding e.g. organic peroxide or a polymerizable vinyl monomer and carrying out a radical reaction, and (iii) a method that involves adding to the polysiloxane-based polymer a crosslinking monomer(s), such as a polyfunctional monomer and/or a mercapto group-containing compound, and then carrying out polymerization.

Examples of the polyfunctional monomer exclude butadiene. The polyfunctional monomer is, for example, a (meth)acrylate containing an ethylenically unsaturated double bond(s), such as allyl (meth)acrylate. Examples of monomer containing two (meth)acrylic groups encompass (i) ethylene glycol di(meth)acrylate, butanediol di(meth)acrylate, hexanediol di(meth)acrylate, and cyclohexane dimethanol di(meth)acrylate, and (ii) polyethylene glycol di(meth)acrylates such as triethylene glycol di(meth)acrylate, tripropylene glycol di(meth)acrylate, tetraethylene glycol di(meth)acrylate, and polyethylene glycol (600) di(meth)acrylate. Examples of monomer containing three (meth)acrylic groups encompass: alkoxylated trimethylolpropane tri(meth)acrylates such as trimethylolpropane tri(meth)acrylate and trimethylolpropane triethoxy tri(meth)acrylate; glycerol propoxy tri(meth)acrylate; pentaerythritol tri(meth)acrylate; and tris(2-hydroxyethyl)isocyanurate tri(meth)acrylate. Examples of monomer containing four (meth)acrylic groups encompass pentaerythritol tetra(meth)acrylate and ditrimethylolpropane tetra(meth)acrylate. Examples of monomer containing five (meth)acrylic groups encompass dipentaerythritol penta(meth)acrylate. Examples of monomer containing six (meth)acrylic groups encompass ditrimethylolpropane hexa(meth)acrylate.

In order to increase the toughness of the resulting cured product, the core layer in an embodiment of the present invention has a glass transition temperature (hereinafter also referred to simply as "Tg") of preferably not higher than 0°C, more preferably not higher than -20°C, even more preferably not higher than -40°C, most preferably not higher than -60°C.

However, in cases where it is desirable to prevent a decrease in elastic modulus (i.e., a decrease in rigidity) of the resulting cured product, the Tg of the core layer is preferably higher than 0°C, more preferably not lower than 20°C, even more preferably not lower than 50°C, particularly preferably not lower than 80°C, most preferably not lower than 120°C.

Examples of a polymer which has a Tg higher than 0°C and is able to form a core layer that can prevent or reduce a decrease in rigidity of the resulting cured product encompass a polymer that is comprised of (i) 50 weight% to 100 weight% (more preferably, 65 weight% to 99 weight%) of at least one type of monomer whose Tg as a homopolymer is higher than 0°C and (ii) 0 weight% to 50 weight% (more preferably 1 weight% to 35 weight%) of at least one type of monomer whose Tg as a homopolymer is lower than 0°C.

Even if the Tg of the core layer is higher than 0°C, it is preferable to introduce a crosslinked structure in the core layer. Examples of methods for introducing the crosslinked structure encompass the methods described above.

The monomer whose Tg as a homopolymer is higher than 0°C is, for example, monomer containing one or more of the following monomers. Note, however, that this does not imply any limitation. Examples of the monomer whose Tg as a homopolymer is higher than 0°C encompass: unsubstituted vinyl aromatic compounds such as styrene and 2-vinyl naphthalene; vinyl substituted aromatic compounds such as α-methyl styrene; ring-alkylated vinyl aromatic compounds such as 3-methylstyrene, 4-methylstyrene, 2,4-dimethylstyrene, 2,5-dimethylstyrene, 3,5-dimethylstyrene, and 2,4,6-trimethylstyrene; ring-alkoxylated vinyl aromatic compounds such as 4-methoxystyrene and 4-ethoxystyrene; ring-halogenated vinyl aromatic compounds such as 2-chlorostyrene and 3-chlorostyrene; ring-ester-substituted vinyl aromatic compounds such as 4-acetoxystyrene; ring-hydroxylated vinyl aromatic compounds such as 4-hydroxystyrene; vinyl esters such as vinyl benzoate and vinyl cyclohexanoate; vinyl halides such as vinyl chloride; aromatic monomers such as acenaphthalene and indene; alkyl methacrylates such as methyl methacrylate, ethyl methacrylate, and isopropyl methacrylate; aromatic methacrylates such as phenyl methacrylate; methacrylates such as isobornyl methacrylate and trimethylsilyl methacrylate; methacrylic acid derivative-containing methacryl monomers such as methacrylonitrile; certain kinds of acrylic acid esters such as isobornyl acrylate and tert-butyl acrylate; and acrylic acid derivative-containing acrylic monomers such as acrylonitrile. Examples of the monomer whose Tg as a homopolymer is higher than 0°C further encompass monomers having a Tg of equal to or above 120°C, such as acrylamide, isopropyl acrylamide, N-vinylpyrrolidone, isobornyl methacrylate, dicyclopentanyl methacrylate, 2-methyl-2-adamanthyl methacrylate, 1-adamanthyl acrylate, and 1-adamanthyl methacrylate.

The core layer has a volume-average particle size of preferably 0.03 pm to 2 pm, more preferably 0.05 pm to 1 pm, even more preferably 0.1 pm to 0.8 pm, most preferably 0.2 pm to 0.8 pm. In many cases, it is difficult to stably obtain a core layer having a volume-average particle size of less than 0.03 pm. A core layer having a volume-average particle size of greater than 2 pm may result in reductions in heat resistance and impact resistance of the resulting cured product.

The amount of the core layer is preferably 40 weight% to 97 weight%, more preferably 60 weight% to 95 weight%, even more preferably 70 weight% to 93 weight%, where 100 weight% represents the entirety of the fine polymer particles. In a case where the amount of the core layer is less than 40 weight%, the resulting cured product would not achieve sufficiently improved toughness. In a case where the amount of the core layer is more than 97 weight%, the fine polymer particles (A) are likely to agglutinate, and this may result in a highly viscous resin composition that is difficult to handle.

In an embodiment of the present invention, the core layer has a single-layer structure in many cases; however, the core layer may have a multilayer structure. In cases where the core layer has a multilayer structure, each layer may have a differing polymer composition.

### (2-1-2. Intermediate layer)

The fine polymer particles (A) in the powdery and/or granular material for thermosetting resin in accordance with an embodiment of the present invention preferably include an intermediate layer between the core layer and the shell layer, and the intermediate layer preferably contains a rubber surface-crosslinked layer.

The powdery and/or granular material preferably includes an intermediate layer between the core layer and the shell layer. The intermediate layer is not particularly limited, provided that the dispersibility of the fine polymer particles (A) in the thermosetting matrix resin (C) is improved. The intermediate layer preferably contains a rubber surface-crosslinked layer, because this further improves the dispersibility and also improves the anti-blocking property.

The rubber surface-crosslinked layer is made of an intermediate layer polymer obtained by polymerizing a rubber surface-crosslinked layer component composed of (i) 30 weight% to 100 weight% of a polyfunctional monomer having two or more radical double bonds in the same molecule and (ii) 0 weight% to 70 weight% of another monomer which is a vinyl monomer. The rubber surface-crosslinked layer brings about (i) an effect of lowering the viscosity of a mixture of the powdery and/or granular material for thermosetting resin in accordance with an embodiment of the present invention and the thermosetting matrix resin (C) and (ii) an effect of improving the dispersibility of the fine polymer particles (A) into the thermosetting matrix resin (C). The rubber surface-crosslinked layer also brings about an effect of increasing the crosslinking density of the core layer and an effect of increasing the graft efficiency of the shell layer.

Specific examples of the polyfunctional monomer encompass the polyfunctional monomers mentioned above. Preferred examples of the polyfunctional monomer encompass (i) allyl methacrylate, ethylene glycol di(meth)acrylate, butanediol di(meth)acrylate, hexanediol di(meth)acrylate, and cyclohexane dimethanol di(meth)acrylate and (ii) polyethylene glycol di(meth)acrylates such as triethylene glycol di(meth)acrylate, tripropylene glycol di(meth)acrylate, tetraethylene glycol di(meth)acrylate, polyethylene glycol (600) di(meth)acrylate, and triallyl isocyanurate.

### (2-1-3. Shell layer)

The shell layer, which is the outermost part of a fine polymer particle, is constituted by a shell polymer obtained by polymerizing a monomer for forming the shell layer and having various roles. In the present specification, the "various roles" are (i) improving compatibility between the fine polymer particles (A) and the thermosetting matrix resin (C), (ii) improving the dispersibility of the fine polymer particles (A) in the thermosetting matrix resin (C), and (iii) allowing the fine polymer particles (A) to be dispersed in the form of primary particles in the resin composition or in the cured product obtained by curing the resin composition.

Such a shell polymer is preferably grafted to the core layer. More accurately, it is preferable that the monomer component used to form the shell layer is graft polymerized to the core polymer that forms the core layer and thereby the shell polymer that substantially forms the shell layer and a rubber core are chemically bonded to each other. The term "rubber core" refers to a core polymer that has properties as a rubber. That is, the shell polymer is preferably formed by graft polymerizing the monomer for forming the shell layer to the core polymer in the presence of the core polymer. Forming the shell polymer in this way results in the shell polymer being graft polymerized to the core polymer and enables the shell polymer to cover part or all of the core polymer. This polymerization operation can be carried out by adding a monomer that is a component of the shell polymer to core polymer latex that is prepared and exists in the form of an aqueous polymer latex, and then carrying out polymerization. The term "in the form of an aqueous polymer latex" means that a mixture of water and the core polymer is in the form of an emulsion. In an embodiment of the present invention, the shell layer may be a graft part, and the graft part may be a shell layer. The "shell layer" and "graft part" may be used interchangeably.

In terms of compatibility and dispersibility in the thermosetting matrix resin composition (C), the monomer for forming the shell layer is preferably, e.g., an aromatic vinyl monomer, a vinyl cyanide monomer, and/or a (meth)acrylate monomer, and more preferably a (meth)acrylate monomer.

The monomer for forming the shell layer (i) preferably contains a reactive group-containing monomer that is a monomer containing at least one selected from the group consisting of epoxy group, oxetane group, hydroxy group, amino group, imide group, carboxylic acid group, carboxylic anhydride group, cyclic ester, cyclic amide, benzoxazine group, and cyanate ester group, and (ii) more preferably is a reactive group-containing monomer that contains epoxy group, hydroxy group, and carboxylic acid group, in order to allow the thermosetting resin component of the thermosetting matrix resin (C) and the fine polymer particles (A) to be chemically bonded to each other to keep the fine polymer particles (A) in a well dispersed state without agglutinating in the cured product and in the polymer.

The proportion of the reactive group-containing monomer contained in 100 weight% of the monomer for forming shell layer is preferably 0.5 weight% to 90 weight%, more preferably 1 weight% to 50 weight%, even more preferably 2 weight% to 35 weight%, particularly preferably 3 weight% to 20 weight%. If the proportion of the reactive group-containing monomer contained in the monomer for forming shell layer is less than 0.5 weight%, the effect of improving the impact resistance of the cured product may decrease. If the proportion of the reactive group-containing monomer contained in the monomer for forming shell layer is greater than 90 weight%, the effect of improving the impact resistance of the cured product may decrease and the storage stability of the resin composition may decrease.

The reactive group-containing monomer may be preferably used in the formation of the shell layer, and more preferably used only to form the shell layer.

It is preferable to use, as the monomer for forming the shell layer, a polyfunctional monomer having two or more double bonds, in that doing so makes it possible to prevent swelling of fine polymer particles (A) in the resin composition, and causes the resin composition to tend to have a low viscosity and favorable handleability and that the dispersibility of the fine polymer particles (A) in the thermosetting matrix resin (C) improves. However, in terms of the effect of improving the toughness of the resulting cured product and the effect of improving the impact-peel-resistant adhesiveness of the cured product, it is preferable not to use, as the monomer for forming the shell layer, a polyfunctional monomer having two or more double bonds.

The amount of the polyfunctional monomer contained in 100 weight% of the monomer for forming the shell layer is, for example, preferably 1 weight% to 20 weight%, more preferably 5 weight% to 15 weight%.

Specific examples of the aromatic vinyl monomers encompass styrene, α-methylstyrene, p-methylstyrene, and divinylbenzene.

Specific examples of the vinyl cyanide monomers encompass acrylonitrile and methacrylonitrile.

Specific examples of the (meth)acrylate monomers encompass methyl (meth)acrylate, ethyl (meth)acrylate, butyl (meth)acrylate, hydroxyethyl (meth)acrylate, and hydroxybutyl (meth)acrylate.

Specific examples of the monomer having epoxy group encompass glycidyl (meth)acrylates, 4-hydroxybutyl (meth)acrylate glycidyl ether, and allyl glycidyl ether.

Specific examples of the monomer having hydroxy group encompass (i) hydroxy straight-chain alkyl (meth)acrylates (in particular, hydroxy straight chain C1-C6 alkyl(meth)acrylates) such as 2-hydroxyethyl (meth)acrylate, hydroxypropyl (meth)acrylate, and 4-hydroxybutyl (meth)acrylate, (ii) caprolactone-modified hydroxy (meth)acrylate, and (iii) hydroxyl-group-containing (meth)acrylates such as (a) hydroxy branching alkyl (meth)acrylates such as α-(hydroxymethyl) methyl acrylate and α-(hydroxymethyl) ethyl acrylate, and (b) a mono (meth)acrylate of a polyester diol (particularly saturated polyester diol) obtained from dicarboxylic acid (e.g. phthalic acid) and dihydric alcohol (e.g. propylene glycol).

Specific, suitable examples of the monomer having carboxylic acid group encompass monocarboxylic acids such as acrylic acid, methacrylic acid, and crotonic acid. Other examples of the monomer encompass dicarboxylic acids such as maleic acid, fumaric acid, and itaconic acid

Specific examples of the polyfunctional monomer having two or more double bonds encompass the polyfunctional monomers mentioned above. Preferred examples of the polyfunctional monomer encompass (i) allyl methacrylate, ethylene glycol di(meth)acrylate, butanediol di(meth)acrylate, hexanediol di(meth)acrylate, and cyclohexane dimethanol di(meth)acrylate and (ii) polyethylene glycol di(meth)acrylates such as triethylene glycol di(meth)acrylate, tripropylene glycol di(meth)acrylate, tetraethylene glycol di(meth)acrylate, polyethylene glycol (600) di(meth)acrylate, and triallyl isocyanurate.

These monomer components may be used alone or in combination of two or more.

The shell layer may include a monomer component other than the above monomer components.

In the present specification, a polymer that is equal in composition to the graft part but is not grafted on the elastic body may be referred to as "non-grafted polymer". In the present specification, the proportion of the polymer grafted on the elastic body to the entirety of polymer produced during formation of the graft part, i.e., the proportion of the graft part to the entirety of the polymer produced during formation of the graft part, is referred to as "graft rate". In other words, the graft rate is the value represented by the following equation: (weight of graft part) / (weight of graft part) + (weight of non-grafted polymer) × 100. Note that the foregoing "graft part" is intended to mean "shell layer".

The graft rate of the shell layer is preferably not less than 70%, more preferably not less than 80%, even more preferably not less than 90%. If the graft rate of the shell layer is less than 70%, the viscosity of a liquid resin composition may increase.

Note that herein, the graft rate is calculated via the following method. First, an aqueous latex containing fine polymer particles (A) is obtained. Next, a powdery and/or granular material of the fine polymer particles (A) is obtained from the aqueous latex. A specific example of a method of obtaining the powdery and/or granular material of the fine polymer particles (A) from the aqueous latex is a method of obtaining the powdery and/or granular material of the fine polymer particles (A) by (i) allowing the fine polymer particles (A) in the aqueous latex to coagulate, (ii) dehydrating the obtained coagulate, and (iii) further drying the coagulate. A method of allowing the fine polymer particles (A) to coagulate is not particularly limited. The fine polymer particles (A) can be allowed to coagulate by, for example, a method using a solvent, a method using a coagulant, a method involving spraying the aqueous latex, or the like. Next, 2 g of the powdery and/or granular material of the fine polymer particles (A) is dissolved in 50 mL of MEK to obtain a MEK solution of the powdery and/or granular material. Then, the obtained MEK solution of the powdery and/or granular material is separated into a part soluble in MEK (MEK-soluble part) and a part insoluble in MEK (MEK-insoluble part). For example, the obtained MEK solution of the powdery and/or granular material is subjected to centrifugation with use of a centrifugal separator (CP60E manufactured by Hitachi Koki Co., Ltd.) at 30000 rpm for one hour, and thereby separated into the MEK-soluble part and the MEK-insoluble part. Note, here, that three sets of centrifugation operations may be carried out in total. Next, 20 mL of condensed MEK-soluble part is added and mixed to 200 mL of methanol. Next, an aqueous calcium chloride solution, obtained by dissolving 0.01 g of calcium chloride in water, is added to the mixture, and stirred for one hour. Then, the obtained mixture is separated into a methanol-soluble part and a methanol-insoluble part. The amount of the methanol-insoluble part is used as "the amount of free polymer" (FP amount).

Then, the graft rate can be calculated using the following equation: Graft rate (%) = 100 - [(FP amount) / {(FP amount) + (MEK-insoluble part)}] / (weight of polymer of graft part) × 10000.

Note that the weight of polymer other than the graft part is the amount of monomer introduced for formation of the polymer other than the graft part. The polymer other than the graft part is, for example, a core polymer that forms the core layer. In a case where the fine polymer particles (A) include the foregoing rubber surface-crosslinked layer, the polymer other than the graft part includes both the core polymer and the rubber surface-crosslinked layer. Furthermore, the weight of the polymer of the graft part is the amount of monomer introduced for formation of the polymer of the graft part.

### (Glass transition temperature of shell layer)

The shell layer has a glass transition temperature (hereinafter may be referred to as "Tg" for short) of preferably not higher than 190°C, more preferably not higher than 160°C, even more preferably not higher than 140°C, particularly preferably not higher than 120°C. Note that, in an embodiment of the present invention, the "glass transition temperature of the shell layer" may be referred to as "glass transition temperature of the graft part".

The Tg of the shell layer can be determined by, for example, the composition of structural units contained in the shell layer. In other words, the Tg of the resulting shell layer can be adjusted by changing the composition of monomer used in production (formation) of the shell layer.

The Tg of the shell layer is determined as follows. With use of a differential scanning calorimeter (DSC) (SSC-5200, manufactured by Seiko Instruments Inc.), measurement is carried out over a period during which a preliminary adjustment (the temperature of a sample is raised to 200°C at a rate of 25°C/min and then kept for 10 minutes, and the temperature is lowered to 50°C at a rate of 25°C/min) is carried out and then the temperature is raised to 200°C at a rate of 10°C/min, to thereby obtain a DSC curve. Values of integral are found based on the obtained DSC curve, and a glass transition temperature is found from the local maximum of the values of the integral. In a case where there are a plurality of local maximums, the highest temperature is used as the glass transition temperature.

### (2-1-4. Method of producing fine polymer particles (A))

### (Method of producing core layer)

The core layer can be produced, for example, in the following manner.

(i) In a case where the core polymer forming the core layer of the fine polymer particles (A) includes at least one type of monomer (first monomer) selected from the group consisting of diene-based monomers (conjugated diene-based monomers) and (meth)acrylate-based monomers, the core layer may be formed by, for example, emulsion polymerization, suspension polymerization, microsuspension polymerization, or the like. The core layer may also be formed by using, for example, a method as disclosed in WO 2005/028546.
(ii) In a case where the core polymer forming the core layer of the fine polymer particles (A) includes a polysiloxane-based polymer, the core layer can be formed by, for example, emulsion polymerization, suspension polymerization, microsuspension polymerization, or the like. The core layer may also be formed by using, for example, a method as disclosed in WO 2006/070664.

### (Method of forming intermediate layer and shell layer)

The intermediate layer can be produced, for example, in the following manner.

The intermediate layer can be formed by using a known radical polymerization method to polymerize a monomer for forming the intermediate layer. If the rubber elastic body to be contained in the core layer is obtained as an emulsion (aqueous latex), polymerization of a monomer having two or more double bonds is preferably carried out via an emulsion polymerization method.

The shell layer can be formed by using a known radical polymerization method to polymerize a monomer for forming the shell layer. If the core layer or a fine polymer particle precursor in which the core layer is covered with the intermediate layer is obtained as an emulsion (aqueous latex), polymerization of the monomer for forming the shell layer is preferably carried out via an emulsion polymerization method. The shell layer may be produced, for example, via a method as disclosed in WO 2005/028546.

Examples of an emulsifying agent (i.e., dispersion agent) that can be used in the emulsion polymerization encompass: (i) anionic emulsifying agents (dispersion agents) such as various acids, alkali metal salts and ammonium salts of such acids (the examples of the acids encompass: (a) alkyl sulfonic acids (such as dioctyl sulfosuccinic acid and dodecylbenzenesulfonic acid) and aryl sulfonic acids, and alkyl ether sulfonic acids and aryl ether sulfonic acids; (b) alkyl sulfates (such as dodecyl sulfate) and aryl sulfates, and alkyl ether sulfates and aryl ether sulfates; (c) alkyl-substituted phosphoric acids and aryl-substituted phosphoric acids, and alkyl ether-substituted phosphoric acids and aryl ether-substituted phosphoric acids; (d) N-alkyl sarcosine acids (such as dodecyl sarcosine acid) and aryl sarcosine acids; and (e) alkyl carboxylic acids (such as oleic acid and stearic acid) and aryl carboxylic acids, and alkyl ether carboxylic acids and aryl ether carboxylic acids); (ii) nonionic emulsifying agents (dispersion agents) such as alkyl-substituted polyethylene glycols and aryl-substituted polyethylene glycols; and (iii) dispersion agents such as polyvinyl alcohol, alkyl-substituted celluloses, polyvinylpyrrolidone, and polyacrylic acid derivatives. These emulsifying agents (dispersion agents) may be used alone or in combination of two or more.

A smaller used amount of the emulsifying agent (dispersion agent) is more preferable, as long as there is no negative effect on the dispersion stability of the aqueous latex containing the fine polymer particles (A). A higher water solubility of the emulsifying agent (dispersion agent) is more preferable. A high water solubility facilitates removal of the emulsifying agent (dispersion agent) by washing, and makes it possible to easily prevent adverse effects on the cured product that is ultimately obtained.

When an emulsion polymerization method is employed, it is possible to use, as a pyrolytic initiator, a known initiator such as 2,2'-azobisisobutyronitrile, hydrogen peroxide, potassium persulfate, and/or ammonium persulfate.

In the production of the fine polymer particles (A), it is also possible to use a redox initiator which contains a combination of (i) a peroxide such as (a) an organic peroxide such as t-butylperoxy isopropyl carbonate, paramenthane hydroperoxide, cumene hydroperoxide, dicumyl peroxide, t-butyl hydroperoxide, di-t-butyl peroxide, and/or t-hexyl peroxide, and/or (b) an inorganic peroxide such as hydrogen peroxide, potassium persulfate, and/or ammonium persulfate, and (ii) as necessary a reducing agent such as sodium formaldehyde sulfoxylate and/or glucose, as necessary a transition metal salt such as iron (II) sulfate, as necessary a chelating agent such as disodium ethylenediaminetetraacetate, and/or as necessary a phosphorus-containing compound such as sodium pyrophosphate.

Using a redox-initiator-based initiator is preferable because doing so makes it possible to (i) carry out polymerization even at a low temperature at which pyrolysis of the peroxide substantially does not occur, and (ii) select the polymerization temperature from a wide range of temperatures. Out of redox initiators, organic peroxides such as cumene hydroperoxide, dicumyl peroxide, and t-butyl hydroperoxide are more preferable for use as a redox initiator.

The used amount of the initiator can be within a known range. If a redox initiator is used, the used amounts of e.g. the reducing agent, the transition metal salt, and the chelating agent can be within a known range. If a monomer having two or more double bonds is polymerized, a known chain transfer agent can be used in an amount within a known range. A surfactant can be additionally used as necessary. The surfactant can be used in an amount within a known range.

Conditions of polymerization such as polymerization temperature, pressure, and deoxygenation can be set within well-known ranges. Polymerization of the monomer for forming the intermediate layer may be carried out in one stage or may be carried out in two or more stages. For polymerization of the monomer for forming the intermediate layer, it is possible to use, for example, (i) a method in which the monomer for forming the intermediate layer is added once to the emulsion (aqueous latex) of the rubber elastic body to be contained in the elastic core layer, (ii) a method in which the monomer for forming the intermediate layer is continuously added to the emulsion (aqueous latex), or (iii) a method in which polymerization is carried out after adding the emulsion of the rubber elastic body to be contained in the elastic core layer to a reaction vessel already containing the monomer for forming the intermediate layer.

### <2-2. Resin (B)>

The resin (B) has a viscosity of not more than 1,000,000 mPa·s at 25°C. The viscosity of the resin (B) at 25°C is, in terms of achieving flowability, preferably not more than 50,000 mPa·s, more preferably not more than 30,000 mPa·s, even more preferably not more than 15,000 mPa·s. For preventing the fine polymer particles (A) from fusing together by allowing the resin (B) to enter gaps between the fine polymer particles (A), the viscosity of the resin (B) at 25°C is preferably not less than 100 mPa·s, not less than 200 mPa·s, not less than 300 mPa·s, not less than 400 mPa·s, not less than 500 mPa·s, not less than 600 mPa·s, not less than 700 mPa·s, not less than 800 mPa·s, not less than 900 mPa·s, more preferably not less than 1000 mPa·s, even more preferably not less than 1500 mPa·s.

Furthermore, in the powdery and/or granular material for thermosetting resin in accordance with an embodiment of the present invention, the viscosity of the resin (B) at 25°C is preferably equal to or less than the value of "the viscosity of the thermosetting matrix resin (C) at 25°C + 50,000 mPa·s". In order to facilitate uniform mixing between the resin (B) and the thermosetting matrix resin (C), in a case where the viscosity of the resin (B) at 25°C is equal to or greater than the viscosity of the thermosetting matrix resin (C) at 25°C, the viscosity of the resin (B) at 25°C is more preferably equal to or less than the value of "the viscosity of the thermosetting matrix resin (C) at 25°C + 20000 mPa·s", more preferably equal to or less than the value of "the viscosity of the thermosetting matrix resin (C) at 25°C + 10000 mPa·s", even more preferably equal to or less than the value of "the viscosity of the thermosetting matrix resin (C) at 25°C + 5000 mPa·s", most preferably equal to or less than "the viscosity of the thermosetting matrix resin (C) at 25°C + 0 mPa·s".

In the powdery and/or granular material for thermosetting resin in accordance with an embodiment of the present invention, the resin (B) is preferably a resin whose differential scanning calorimetry (DSC) thermogram shows an endothermic peak at 25°C or below, more preferably a resin whose differential scanning calorimetry (DSC) thermogram shows an endothermic peak at 0°C or below.

In the powdery and/or granular material for thermosetting resin in accordance with an embodiment of the present invention, the resin (B) preferably contains a thermosetting resin.

Specifically, the resin (B) preferably contains a thermosetting resin in view of effects on various physical properties of the thermosetting matrix resin (C) to which the resin (B) is mixed. Examples of the thermosetting resin encompass ethylenically unsaturated monomers, epoxy resins, phenolic resins, polyol resins, and amino-formaldehyde resins. One of such thermosetting resins may be used alone or in combination of two or more.

In the powdery and/or granular material for thermosetting resin in accordance with an embodiment of the present invention, the thermosetting resin contained in the resin (B) is preferably at least one selected from the group consisting of ethylenically unsaturated monomers, epoxy resins, phenolic resins, polyol resins, and amino-formaldehyde resins. The phrase "thermosetting resin is ethylenically unsaturated monomer" can be referred to as "thermosetting resin is a resin containing a polymer obtained by polymerizing ethylenically unsaturated monomer".

Note, however, that, in view of effects on various physical properties of the thermosetting matrix resin (C) contained in a resin composition, the thermosetting resin contained in the resin (B) is preferably of the same kind as the thermosetting matrix resin (C). That is, in a case where the thermosetting matrix resin (C) contained in the resin composition is an epoxy resin, the resin (B) is preferably also an epoxy resin.

### (Ethylenically unsaturated monomer)

The ethylenically unsaturated monomer is not particularly limited, provided that the ethylenically unsaturated monomer contains at least one ethylenically-unsaturated-bond-containing monomer per molecule.

Examples of the ethylenically unsaturated monomer encompass acrylic acid, α-alkyl acrylic acids, α-alkyl acrylic acid esters, β-alkyl acrylic acids, β-alkyl acrylic acid esters, methacrylic acid, esters of acrylic acid, esters of methacrylic acid, vinyl acetate, vinyl esters, unsaturated esters, polyunsaturated carboxylic acids, polyunsaturated esters, maleic acid, maleic acid esters, maleic anhydride, and acetoxy styrene. One of such ethylenically unsaturated monomers may be used alone or in combination of two or more.

### (Epoxy resin)

The epoxy resin is not particularly limited, provided that the epoxy resin contains at least one epoxy bond per molecule.

Specific examples of the epoxy resin encompass, but are not limited to, bisphenol A epoxy resin, bisphenol F epoxy resin, bisphenol AD epoxy resin, bisphenol S epoxy resin, glycidyl ester type epoxy resin, glycidyl amine type epoxy resin, novolac type epoxy resin, glycidyl ether epoxy resin of bisphenol A propylene oxide adduct, hydrogenated bisphenol A (or F) epoxy resin, fluorinated epoxy resin, rubber-modified epoxy resin containing polybutadiene or NBR, flame-resistant epoxy resin such as glycidyl ether of tetrabromo bisphenol A, p-oxybenzoic acid glycidyl ether ester type epoxy resin, m-aminophenol type epoxy resin, diaminodiphenylmethane-based epoxy resin, urethane-modified epoxy resin containing urethane bond, various types of alicyclic epoxy resin, glycidyl ether of a polyhydric alcohol (such as N,N-diglycidyl aniline, N,N-diglycidyl-o-toluidine, triglycidyl isocyanurate, polyalkylene glycol diglycidyl ether, and glycerin), and epoxidized unsaturated polymer (such as hydantoin-type epoxy resin and petroleum resin), amino-containing glycidyl ether resin, and epoxy compound obtained by causing an addition reaction between one of the above epoxy resins and e.g. a bisphenol A (or F) or a polybasic acid. Note, however, that any of typically used epoxy resins can be used. Any of such epoxy resins may be used alone or in combination of two or more.

Out of the epoxy resins listed above, those containing at least two epoxy groups per molecule are preferable in that, for example, in the step of curing, such epoxy resins are highly reactive and make it easy for the resultant cured product to form a three-dimensional network mesh structure. Out of such epoxy resins, epoxy resins containing a bisphenol type epoxy resin as a main component are more preferred, because they are economical and easily available.

### (Phenolic resin)

The phenolic resin is not particularly limited, provided that the phenolic resin is a compound obtained through a reaction between a phenol and a formaldehyde. The phenol is not particularly limited, and examples thereof encompass phenols such as phenol, ortho-cresol, meta-cresol, para-cresol, xylenol, para-tertiary butylphenol, para-octylphenol, para-phenylphenol, bisphenol A, bisphenol F, and resorcin. In particular, phenol and creosol are preferred as a phenol. Similarly, the aldehyde is not particularly limited, and examples thereof encompass aldehydes such as formaldehyde, acetaldehyde, butylaldehyde, and acrolein, and mixtures thereof. Alternatively, substances which are sources of the above aldehydes or solutions of the above aldehydes can be used. Formaldehyde is preferred because the reaction operation is easy.

The molar ratio in reaction between a phenol (referred to as "P") and an aldehyde (referred to as "F") (such a molar ratio may be hereinafter referred to as "reaction molar ratio (F/P)") is not particularly limited. In a case where an acid catalyst is used, the reaction molar ratio (F/P) is preferably 0.4 to 1.0, more preferably 0.5 to 0.8. In a case where an alkali catalyst is used, the reaction molar ratio (F/P) is preferably 0.4 to 4.0, more preferably 0.8 to 2.5.

When the reaction molar ratio is less than 0.5, yield is likely to decrease and the resulting phenolic resin is likely to have a lower molecular weight. On the contrary, when the reaction molar ratio is more than 0.8, the phenolic resin is likely to have a higher molecular weight and a higher softening point, and it may be impossible to achieve sufficient flowability during heating. Furthermore, molecular weight may be difficult to control, and, depending on the conditions under which the reaction takes place, gelation may occur or partially gelatinized product may be likely to form.

### (Polyol resin)

The polyol resin is a compound containing two or more active hydrogens as its terminal group(s), and is a bi- or more functional polyol with a molecular weight of about 50 to 20,000. Examples of the polyol resin encompass aliphatic alcohols, aromatic alcohols, polyether type polyols, polyester type polyols, polyolefin polyols, and acrylic polyols.

The aliphatic alcohols may be dihydric alcohols or trihydric or higher polyhydric alcohols (such as trihydric alcohols or tetrahydric alcohols). Examples of dihydric alcohols encompass (i) alkylene glycols (in particular, about C1-C6 alkylene glycols) such as ethylene glycol, propylene glycol, 1,3-propanediol, 1,3-butanediol, 1,4-butanediol, 1,5-pentanediol, 1,6-hexanediol, 3-methyl-1,5-pentanediol, and neopentylglycol and (ii) substances obtained through dehydrogenative condensation of two or more molecules (e.g., about two to six molecules) of any of the above alkylene glycols (such as diethylene glycol, dipropylene glycol, and tripropylene glycol). Examples of trihydric alcohols encompass glycerin, trimethylolpropane, trimethylolethane, and 1,2,6-hexanetriol (in particular, about C3 to C10 trihydric alcohols). Examples of tetrahydric alcohols encompass pentaerythritol and diglycerin. Other examples encompass saccharides such as monosaccharides, oligosaccharides, and polysaccharides.

Examples of the aromatic alcohols encompass: bisphenols such as bisphenol A and bisphenol F; biphenyls such as dihydroxybiphenyl; polyhydric phenols such as hydroquinone and phenol-formaldehyde condensate; and naphthalenediol.

Examples of the polyether type polyols encompass random copolymers, block copolymers, and mixtures thereof obtained by ring-opening polymerization of (i) an active-hydrogen-containing initiator and (ii) ethylene oxide, propylene oxide, butylene oxide, or styrene oxide, or the like. Examples of the active-hydrogen-containing initiator encompass initiators containing one or more active hydrogens such as: diols such as ethylene glycol, diethylene glycol, propylene glycol, dipropylene glycol, 1,3-butanediol, 1,4-butanediol, 1,6-hexanediol, neopentylglycol, and bisphenol A; triols such as trimethylolethane, trimethylolpropane, and glycerin; saccharides such as monosaccharides, oligosaccharides, and polysaccharides; sorbitol; and amines such as ammonia, ethylenediamine, urea, monomethyl diethanolamine, and monoethyl diethanolamine.

Examples of the polyester type polyols encompass polymers obtained by, in the presence of an esterification catalyst at a temperature falling within the range of from 150°C to 270°C, polycondensation of, for example, (i) a polybasic acid such as maleic acid, fumaric acid, adipic acid, sebacic acid, phthalic acid, dodecanedioic acid, isophthalic acid, or azelaic acid, and/or an acid anhydride thereof and (ii) a polyhydric alcohol such as ethylene glycol, propylene glycol, 1,4-butanediol, 1,6-hexanediol, diethylene glycol, dipropylene glycol, neopentylglycol, or 3-methyl-1,5-pentanediol. Examples of the polyester type polyols further encompass polymers obtained by ring-opening polymerization of ε-caprolactone, valerolactone, or the like; and active hydrogen compounds containing two or more active hydrogens such as polycarbonate diol and castor oil.

Examples of the polyolefin type polyols encompass polybutadiene polyol, polyisoprene polyol, and hydrogenated versions thereof.

Examples of the acrylic polyols encompass: copolymers of, for example, (i) hydroxyl-containing monomer such as hydroxyethyl (meth)acrylate, hydroxybutyl (meth)acrylate, or vinylphenol and (ii) general-purpose monomer such as n-butyl (meth)acrylate or 2-ethylhexyl (meth)acrylate; and mixtures thereof.

Out of those listed above, the polyether type polyols are preferred, because the resulting resin composition has lower viscosity and has excellent workability, and the resulting cured product is well balanced between its hardness and toughness. In terms of adhesiveness, the polyester type polyols are preferred.

### (Amino-formaldehyde resin)

The amino-formaldehyde resin is not particularly limited, provided that the amino-formaldehyde resin is a compound obtained through a reaction between an amino compound (also referred to as "amino-based monomer compound") and an aldehyde in the presence of an alkaline catalyst. Examples of the amino compound used here encompass: (i) melamine; (ii) 6-substituted guanamines such as guanamine, acetoguanamine, and benzoguanamine; (iii) amine-substituted triazine compounds such as CTU guanamine (3,9-bis[2-(3,5-diamino-2,4,6-triazaphenyl) ethyl] -2,4,8,10-tetraoxaspiro[5,5]undecane) and CMTU guanamine (3,9-bis[(3,5-diamino-2,4,6-triazaphenyl)methyl]-2,4,8, 10-tetraoxaspiro[5,5]undecane); and (iv) ureas such as urea, thiourea, and ethyleneurea. Examples of the amino compound used here also encompass: substituted melamine compounds which are different from melamine in that the hydrogen of amino group is substituted by an alkyl group, an alkenyl group, and/or phenyl group [Specification of United States Patent No. 5,998,573 (a Japanese family member thereof: Japanese Patent Application Publication Tokukaihei No. 9-143238)]; and substituted melamine compounds which are different from melamine in that the hydrogen of amino group is substituted by a hydroxyalkyl group, a hydroxyalkyloxyalkyl group, and/or an aminoalkyl group [Specification of United States Patent No. 5,322,915 (a Japanese family member thereof: Japanese Patent Application Publication Tokukaihei No. 5-202157)]. Out of those listed above, melamine, guanamine, acetoguanamine and benzoguanamine, which are industrially produced and inexpensive, are preferred, and melamine is most preferred, as polyfunctional amino compounds.

In an embodiment of the present invention, the amino-based monomer compound can be one of or two or more of the foregoing amino compounds. In addition to the foregoing polyfunctional amino compounds, any of phenols, anilines, and/or the like such as phenol, creosol, alkylphenol, resorcin, hydroquinone, and/or pyrogallol may be used.

Examples of the aldehyde encompass formaldehyde, paraformaldehyde, acetaldehyde, benzaldehyde, and furfural. Preferred aldehydes are formaldehyde and paraformaldehyde, which are inexpensive and well react with the foregoing amino-based monomer compound. It is preferable to use an aldehyde compound in the following amount: the amount of effective aldehyde group in the aldehyde compound per mole of the amino-based monomer compound is preferably 1.1 mol to 6.0 mol, particularly 1.2 mol to 4.0 mol.

In the powdery and/or granular material for thermosetting resin in accordance with an embodiment of the present invention, the resin (B) may contain a thermoplastic resin.

Examples of the thermoplastic resin encompass acrylic-based polymers, vinyl-based copolymers, polycarbonate, polyamides, polyesters, polyphenylene ether, polyurethane, and polyvinyl acetate. One of such thermoplastic resins may be used alone or in combination of two or more.

An acrylic-based polymer is a polymer that contains acrylate ester monomer as a main component. The ester portion of the acrylate ester monomer preferably has 1 to 20 carbon atoms. Examples of the acrylic-based polymer encompass: homopolymers obtained from acrylate ester monomer; and copolymers of (i) acrylate ester monomer and (ii) (a) monomer such as an unsaturated fatty acid, acrylamide-based monomer, maleimide-based monomer, or vinyl acetate or (b) a vinyl-based copolymer. Examples of the acrylate ester monomer encompass methyl acrylate (MA), ethyl acrylate (EA), 2-ethylhexyl acrylate (2EHA), acrylic acid (AA), methacrylic acid (MA), 2-hydroxyethyl acrylate (2HEA), 2-hydroxyethyl methacrylate (2HEMA), butyl acrylate (BA), methyl methacrylate (MMA), ethyl methacrylate (EMA), n-butyl methacrylate (nBMA), isobutyl methacrylate (iBMA), methacrylic acid (MAA), propyl acrylate, isopropyl acrylate, isobutyl acrylate, t-butyl acrylate, neopentyl acrylate, isodecyl acrylate, lauryl acrylate, tridecyl acrylate, stearyl acrylate, cyclohexyl acrylate, isobornyl acrylate, tricyclodecynyl acrylate, hydroxyethyl acrylate, hydroxybutyl acrylate, hydroxypropyl acrylate, hydroxyethyl acrylate, 2-methoxyethyl acrylate, dimethylaminoethyl acrylate, chloroethyl acrylate, tryfluoroethyl acrylate, and tetrahydrofurfuryl acrylate. One of such acrylate ester monomers may be used alone or in combination of two or more.

In the copolymer, the ratio between (i) the acrylate ester monomer and (i) the vinyl-based copolymer, unsaturated fatty acid, acrylamide-based monomer, maleimide-based monomer, or vinyl acetate is preferably as follows: the acrylate ester monomer is contained in an amount of 50 weight% to 100 weight%; and the acrylate ester monomer is contained in an amount of 50 weight% to 100 weight%.

The acrylic-based polymer contains butyl acrylate (BA) in an amount of preferably not less than 50 weight%, more preferably not less than 60 weight%, even more preferably not less than 70 weight%, particularly preferably not less than 80 weight%, most preferably not less than 90 weight%.

The vinyl-based copolymer is obtained by copolymerizing a vinyl-based monomer mixture containing aromatic vinyl-based monomer, vinyl cyanide-based monomer, and/or unsaturated alkyl carboxylate ester-based monomer. The vinyl-based monomer mixture may further contain some other monomer that is copolymerizable with the above listed monomer(s).

Examples of the aromatic vinyl-based monomer encompass styrene, α-methylstyrene, o-methylstyrene, m-methylstyrene, p-methylstyrene, t-butylstyrene, and vinyltoluene. One of such vinyl-based monomers may be used alone or in combination of two or more. Out of those listed above, aromatic vinyl monomers are preferred, styrene is more preferred, because such monomers make it possible to easily increase refractive index.

The unsaturated alkyl carboxylate ester-based monomer is not particularly limited, and is preferably, for example, an ester of a C1 to C6 alcohol and acrylic acid or methacrylic acid. The ester of a C1 to C6 alcohol and acrylic acid or methacrylic acid may further contain a substituent such as hydroxy group or halogen group.

Examples of the ester of a C1 to C6 alcohol and acrylic acid or methacrylic acid encompass methyl (meth)acrylate, ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate, 3-hydroxypropyl (meth)acrylate, 2,3,4,5,6-pentahydroxyhexyl (meth)acrylate, and 2,3,4,5-tetrahydroxypentyl (meth)acrylate. One of such esters may be used alone or in combination of two or more.

Examples of the vinyl cyanide-based monomer encompass acrylonitrile, methacrylonitrile, and ethacrylonitrile. One of such vinyl cyanide-based monomers may be used alone or in combination of two or more.

The foregoing other monomer that is copolymerizable with the above listed monomer(s) is not particularly limited, provided that the monomer is a vinyl-based monomer other than the foregoing aromatic vinyl-based monomer, unsaturated alkyl carboxylate ester-based monomer, and vinyl cyanide-based monomer and does not impair the effects of the present invention. Specific examples of the foregoing other monomer encompass unsaturated fatty acids, acrylamide-based monomers, maleimide-based monomers, vinyl acetate, and acrylate ester monomers. One of such monomers may be used alone or in combination of two or more.

An unsaturated fatty acid can be selected from, for example, itaconic acid, maleic acid, fumaric acid, butenoic acid, acrylic acid, methacrylic acid, and the like.

An acrylamide-based monomer can be selected from, for example, acrylamide, methacrylamide, N-methylacrylamide, and the like.

A maleimide-based monomer can be selected from, for example, N-methylmaleimide, N-ethylmaleimide, N-isopropylmaleimide, N-butylmaleimide, N-hexylmaleimide, N-octylmaleimide, N-dodecylmaleimide, N-cyclohexylmaleimide, N-phenylmaleimide, and the like.

A method of producing the vinyl copolymer is not particularly limited, and is, for example, emulsion polymerization, suspension polymerization, mass polymerization, solution polymerization, or the like.

The method of producing the vinyl-based copolymer may involve using a polymerization initiator as necessary. The polymerization initiator can be at least one appropriately selected from, for example, peroxides, azo compounds, potassium persulfate, and the like.

Examples of peroxides encompass benzoyl peroxide, cumene hydroperoxide, dicumyl peroxide, diisopropylbenzene hydroperoxide, t-butylhydroperoxide, t-butyl peroxyacetate, t-butyl peroxybenzoate, t-butyl isopropyl carbonate, di-t-butyl peroxide, t-butyl peroxyoctoate, 1,1-bis(t-butylperoxy)3,3,5-trimethylcyclohexane, 1,1-bis(t-butylperoxy(cyclohexane, and t-butylperoxy-2-ethylhexanoate. Out of those listed above, cumene hydroperoxide, 1,1-bis(t-butylperoxy)3,3,5-trimethylcyclohexane, and 1,1-bis(t-butylperoxy)cyclohexane are particularly preferred.

Examples of azo compounds encompass azobisisobutyronitrile, azobis(2,4-dimethylvaleronitrile), 2-phenyl azo-2,4-dimethyl-4-methoxyvaleronitrile, 2-cyano-2-propylazoformamide, 1, 1'-azobiscyclohexane-1-carbonitrile, azobis(4-methoxy-2,4-dimethylvaleronitrile), dimethyl 2,2'-azobisisobutyrate, 1-t-butyl azo-2-cyanobutane, and 2-t-butyl azo-2-cyano-4-methoxy-4-methylpentane. Out of those listed above, 1,1'-azobiscyclohexane-1-carbonitrile is particularly preferred.

The amount of the polymerization initiator added is not particularly limited.

Specific examples of the vinyl-based copolymer encompass polyvinyl chloride, chlorinated polyvinyl chloride, polystyrene, styrene-acrylonitrile copolymers, styrene-acrylonitrile-N-phenylmaleimide copolymers, α-methylstyrene-acrylonitrile copolymers, poly(methyl methacrylate), and methyl methacrylate-styrene copolymers. One of such copolymers may be used alone or in combination of two or more.

Examples of polyesters encompass polyethylene terephthalate and polybutylene terephthalate.

### <2-3. Method of producing powdery and/or granular material>

A method of producing a powdery and/or granular material containing fine polymer particles (A) and a resin (B) is not particularly limited, and is, for example, (ia) a method involving subjecting an aqueous latex to salting out and thereby allowing the fine polymer particles (A) and the resin (B) to flocculate, and then dehydrating and drying them, (iia) a method involving obtaining the powdery and/or granular material by spray-drying the aqueous latex, or the like method.

More specifically, the method (ia) can be referred to as a method involving: subjecting an aqueous latex containing the fine polymer particles (A) and the resin (B) to salting out and thereby allowing the fine polymer particles (A) and the resin (B) to flocculate; and then subjecting the flocculate to dehydration and drying. More specifically, the method (iia) can be referred to as a method involving spray-drying an aqueous latex that contains the fine polymer particles (A) and the resin (B).

The fine polymer particles (A) and the resin (B) can be mixed together by any of various methods. A method of mixing the fine polymer particles (A) and the resin (B) together is, for example, (i) a method involving directly adding the resin (B) to the fine polymer particles (A) during formation of the fine polymer particles (A), a method involving adding the resin (B) in the form of an aqueous latex to the fine polymer particles (A) during formation of the fine polymer particles (A), or a method involving adding the resin (B) in the form of a solution to the fine polymer particles (A) during formation of the fine polymer particles (A), (ii) a method involving directly adding the resin (B) to an aqueous latex of the fine polymer particles (A), a method involving adding the resin (B) in the form of an aqueous latex to an aqueous latex of the fine polymer particles (A), or a method involving adding the resin (B) in the form of a solution to an aqueous latex of the fine polymer particles (A), or the like method. A method involving adding the resin (B) in the form of an aqueous latex to an aqueous latex of the fine polymer particles (A) is preferred. The resin (B) in the form of an aqueous latex can be referred to as the resin (B) in the form of an aqueous emulsion. Alternatively, the resin (B) in the form of an aqueous latex can be referred to as the resin (B) in the form of emulsified liquid.

The following description will discuss a case where the fine polymer particles (A) and the resin (B) are mixed together by adding the resin (B) in the form of an aqueous latex, e.g., adding the resin (B) in the form of emulsified liquid. In this case, the drop size of the resin (B) in the form of emulsified liquid can influence the dispersibility of the resulting powdery and/or granular material. The drop size of the resin (B) in the form of emulsified liquid is preferably equal to or less than the volume-average particle size of the fine polymer particles (A), because the resin (B) can efficiently enter the gaps between the fine polymer particles (A). In a case where the resin (B) is a thermoplastic resin such as an acrylic-based polymer, the resin (B) can be synthesized by emulsion polymerization. This is advantageous in that the drop size of the resin (B) in the form of emulsified liquid can be appropriately changed in the range of from micrometer size to nanometer size.

### [3. Resin composition which contains (i) powdery and/or granular material for thermosetting resin and (ii) thermosetting matrix resin (C)]

A thermosetting resin composition in accordance with an embodiment of the present invention contains: any of the powdery and/or granular materials for thermosetting resin described in the [2. Powdery and/or granular material for thermosetting resin which contains fine polymer particles (A) and resin (B)] section; and a thermosetting matrix resin (C).

A powdery and/or granular material in accordance with an embodiment of the present invention can be used as a thermosetting resin composition by mixing the powdery and/or granular material with the thermosetting matrix resin (C). The resin (B) contained in the powdery and/or granular material for thermosetting resin is usually compatible with the thermosetting matrix resin (C) and the resin (B) becomes a component of a matrix resin contained in the thermosetting resin composition. Specifically, usually, in many cases, the resin (B) serves also as a matrix resin.

### <3-1. Thermosetting matrix resin (C)>

The blending ratio between the powdery and/or granular material for thermosetting resin and the thermosetting matrix resin (C) is as follows. In a case where the combined amount of the powdery and/or granular material for thermosetting resin and the thermosetting matrix resin (C) is 100 weight%, it is usually preferable that the amount of the powdery and/or granular material for thermosetting resin is 0.5 weight% to 50 weight% and the amount of the thermosetting matrix resin (C) is 50 weight% to 99.5 weight%, more preferable that the amount of the powdery and/or granular material for thermosetting resin is 1 weight% to 35 weight% and the amount of the thermosetting matrix resin (C) is 65 weight% to 99 weight%, even more preferable that the amount of the powdery and/or granular material for thermosetting resin is 1.5 weight% to 25 weight% and the amount of the thermosetting matrix resin (C) is 75 weight% to 98.5 weight%, and most preferable that the amount of the powdery and/or granular material is 2.5 weight% to 20 weight% and the amount of the thermosetting matrix resin (C) is 80 weight% to 97.5 weight%.

The state of the thermosetting matrix resin (C) is not particularly limited, provided that the thermosetting matrix resin (C) is flowable when mixed with the powdery and/or granular material for thermosetting resin. The thermosetting matrix resin (C) may be in its solid state at room temperature. In terms of achieving workability, the thermosetting matrix resin (C) is preferably in its liquid state at room temperature.

Generally, the temperature at which the powdery and/or granular material for thermosetting resin and the thermosetting matrix resin (C) are mixed together is set to a temperature at which the thermosetting matrix resin (C) is flowable. If the resin (B) is flowable at a temperature at which the thermosetting matrix resin (C) is flowable, the resin (B) and the thermosetting matrix resin (C) can be easily mixed uniformly. On the contrary, in a case where the thermosetting matrix resin is in its liquid state and an epoxy resin in the powdery and/or granular material to be added to the thermosetting matrix resin is in its solid state like Examples disclosed in conventional techniques, the thermosetting matrix resin and the powdery and/or granular material cannot be easily mixed together uniformly. Note that, in the present specification, a case where the thermosetting matrix resin (C) is in its liquid state at 25°C is interpreted as meaning that "viscosity of the thermosetting matrix resin (C) at 25°C is equal to or more than the viscosity of the resin (B) at 25°C".

The thermosetting matrix resin (C) may be of the same kind as the resin (B), and examples of the thermosetting matrix resin (C) encompass ethylenically unsaturated monomers, epoxy resins, phenolic resins, polyol resins, and amino-formaldehyde resins. One of such resins may be used alone or in combination of two or more.

In the thermosetting resin composition in accordance with an embodiment of the present invention, the thermosetting matrix resin (C) is preferably at least one selected from the group consisting of ethylenically unsaturated monomers, epoxy resins, phenolic resins, polyol resins, and amino-formaldehyde resins.

### <3-2. Other components>

The thermosetting resin composition in accordance with an embodiment of the present invention may contain some other component as necessary. Examples of such other component encompass: curing agents; coloring agents such as pigments and colorants; extenders; ultraviolet ray absorbing agents; antioxidants; stabilizers (antigelling agents); plasticizing agents; leveling agents; defoaming agents; silane coupling agents; antistatic agents; flame retarders; lubricants; viscosity reducers; shrinkage reducing agents; inorganic filler; organic filler; thermoplastic resins; desiccants; and dispersion agents.

### [4. Method of producing powdery and/or granular material for thermosetting resin]

### <4-1. Production Method 1>

A method of producing a powdery and/or granular material for thermosetting resin in accordance with an embodiment of the present invention (this method may be referred to as "Production Method 1") includes: i) adding a resin (B) to an aqueous latex containing fine polymer particles (A); ii) preparing, with use of the aqueous latex obtained in step i), an agglutinate that contains the fine polymer particles (A) and the resin (B); and iii) collecting the agglutinate. The fine polymer particles (A) have a graft part which is a polymer containing structural units derived from at least one type of monomer selected from the group consisting of aromatic vinyl monomers, vinyl cyanide monomers, and (meth)acrylate monomers. The resin (B) has a viscosity of not more than 1,000,000 mPa·s at 25°C. The fine polymer particles (A) is contained in an amount of 50 weight% to 99 weight% and the resin (B) is contained in an amount of 1 weight% to 50 weight%, where 100 weight% represents the total amount of the fine polymer particles (A) and the resin (B). In the present specification, the terms "agglutinate", "coagulate", and "flocculate" have the same meaning and may be used interchangeably.

The following description will discuss the steps relating to the present embodiment (Production Method 1). For matters other than those detailed below, the disclosures in the [2. Powdery and/or granular material for thermosetting resin which contains fine polymer particles (A) and resin (B)] section apply.

The step of adding the resin (B) is a step of obtaining an aqueous latex that contains the fine polymer particles (A) and the resin (B). The step of adding the resin (B) can be referred to as a step of mixing the fine polymer particles (A) and the resin (B). A specific method of adding the resin (B) to the aqueous latex that contains the fine polymer particles (A) is not particularly limited, and is, for example, a method involving directly adding the resin (B) to the aqueous latex that contains the fine polymer particles (A), a method involving adding the resin (B) in the form of aqueous emulsion to the aqueous latex that contains the fine polymer particles (A), a method involving adding the resin (B) in the form of a solution to the aqueous latex that contains the fine polymer particles (A), or the like method. In the step of adding the resin (B), it is preferable to add the resin (B) in the form of aqueous emulsion to the aqueous latex that contains the fine polymer particles (A).

The step of preparing an agglutinate is a step of allowing the fine polymer particles (A) and the resin (B) in the aqueous latex to agglutinate. In the step of preparing an agglutinate, it is possible to obtain an agglutinate that contains the fine polymer particles (A) and the resin (B). A method of allowing the fine polymer particles (A) and the resin (B) to agglutinate is not particularly limited, and is, for example, a method using a solvent, a method using an agglutinant (also referred to as coagulant or flocculant), a method involving spraying the aqueous latex that contains the fine polymer particles (A) and the resin (B), or the like method.

The step of preparing an agglutinate preferably includes a step of preparing an agglutinate that contains the fine polymer particles (A) and the resin (B) with use of an agglutinant. This arrangement does not necessitate using a solvent and therefore makes it possible to obtain a powdery and/or granular material for thermosetting resin that places less environmental load. Furthermore, the above arrangement does not necessitate using any special equipment for spraying, and therefore makes it possible to easily obtain a powdery and/or granular material for thermosetting resin.

The step of collecting is a step of obtaining the agglutinate that contains the fine polymer particles (A) and the resin (B) by removing water from the aqueous latex. The step of collecting can be referred to as a step of separating the aqueous latex into (i) the agglutinate that contains the fine polymer particles (A) and the resin (B) and (ii) a water component. Note that the water component is a mixture that contains water as a main component and contains an emulsifying agent, non-agglutinated fine polymer particles (A) and resin (B), and the like. A method of collecting the agglutinate that contains the fine polymer particles (A) and the resin (B) is not particularly limited, and is, for example, filtration, centrifugation, or the like method.

The method of producing a powdery and/or granular material for thermosetting resin in accordance with an embodiment of the present invention may further include a washing step and a drying step.

The washing step is a step of washing the agglutinate that contains the polymer particles (A) and the resin (B) obtained in the collecting step. By washing the agglutinate, it is possible to obtain a powdery and/or granular material for thermosetting resin that contains no or small amounts of contaminants and the like. In the washing step, the agglutinate is washed more preferably with water, and even more preferably with ion exchanged water or pure water.

The washing step is not particularly limited as to a specific method thereof, provided that the washing step is to wash the agglutinate. The washing step can be achieved by, for example, a method involving mixing the agglutinate and water and stirring with use of a stirrer, a method involving kneading the agglutinate and water with use of a kneader, a method involving mixing the agglutinate and water with use of a planetary centrifugal mixer, a method involving spraying water to the agglutinate, a method involving carrying out cake washing with use of a press filter, or the like method. Examples of the kneader encompass various types of kneaders such as batch type kneaders, continuous type kneaders, extrusion kneaders, and extruders.

The period of time during which the washing is carried out is not particularly limited, and is, for example, 1 second to 60 minutes. The period of time during which the washing is carried out is preferably 1 second to 45 minutes, more preferably 1 minute to 30 minutes, even more preferably 3 minutes to 30 minutes, particularly preferably 5 minutes to 30 minutes, particularly preferably 10 minutes to 30 minutes. The period of time during which the washing is carried out may be 5 minutes to 10 minutes.

The number of times the washing is carried out is not particularly limited, and is, for example, 1 (cycle) to 10 (cycles). The number of times the washing is carried out is preferably 1 (cycle) to 6 (cycles), more preferably 1 (cycle) to 5 (cycles), even more preferably 1 (cycle) to 4 (cycles), most preferably 1 (cycle) to 3 (cycles).

The amount of rinse water used in washing is not particularly limited, and is, for example, 0.1 parts by weight to 1000 parts by weight with respect to 1 part by weight of the agglutinate. The amount of rinse water with respect to 1 part by weight of the agglutinate is preferably 1 part by weight to 500 parts by weight, more preferably 1 part by weight to 200 parts by weight, even more preferably 1 part by weight to 10 parts by weight, particularly preferably 2 parts by weight to 10 parts by weight. The amount of rinse water with respect to 1 part by weight of the agglutinate may be 15 parts by weight to 500 parts by weight, may be 2 parts by weight to 5 parts by weight. Washing by kneading the agglutinate and water with use of a kneader is preferred, because a small amount of rinse water will suffice.

The temperature of rinse water is not limited. Rinse water can be, for example, water at room temperature or water warmer than room temperature. Water warmer than room temperature is preferred because such warmer water is more effective in washing. The temperature of rinse water is preferably below the glass transition temperature of the shell layer of the fine polymer particles (A). When the temperature of rinse water is below the Tg of the shell layer of the fine polymer particles (A), the fine polymer particles (A) are prevented from fusing together and from decreasing in dispersibility. That is, it is advantageous in that, in a resin composition containing the resulting powdery and/or granular material, the fine polymer particles (A) have even better dispersibility. The temperature of rinse water is, for example, 10°C to 100°C. The temperature of rinse water is preferably 15°C to 100°C, more preferably 20°C to 100°C, even more preferably 40°C to100°C, even more preferably 40°C to 80°C, particularly preferably 40°C to 70°C. The temperature of rinse water may be 15°C to 90°C, may be 20°C to 85°C. The temperature of rinse water is preferably below 90°C, more preferably below 80°C, even more preferably below 70°C, because this makes it possible to obtain a powdery and/or granular material for thermosetting resin that is highly dispersible in a thermosetting resin.

A method of removing rinse water used in washing is not particularly limited. Examples of the method encompass wiping away rinse water used in washing, filtration under reduced pressure, oil-water separation, filter press, centrifugation, belt press, screw press, membrane separation, and press dehydration.

An object to be removed by washing is intended to mean impurities contained in the agglutinate in general, and is not particularly limited. Examples encompass: contaminants derived from an emulsifying agent (e.g., phosphorus-based emulsifying agent, sulfonic acid-based emulsifying agent); and, in a case where an agglutinant (described later) is used, contaminants derived from the agglutinant.

Examples of the emulsifying agent encompass (a) anionic emulsifying agents, e.g., acids such as those listed below, alkali metal salts of such acids, and ammonium salts of such acids, (b) nonionic emulsifying agents, e.g., alkyl- or aryl-substituted polyethylene glycols, (c) polyvinyl alcohols, alkyl-substituted celluloses, polyvinylpyrrolidone, and polyacrylic acid derivatives. Examples of the acids encompass (a1) alkyl sulfonic acids (such as dioctyl sulfosuccinic acid and dodecylbenzenesulfonic acid) and aryl sulfonic acids, (a2) alkyl sulfates (such as dodecyl sulfate) and aryl sulfates, and alkyl or aryl ether sulfates, (a3) alkyl- or aryl-substituted phosphoric acids and alkyl or aryl ether-substituted phosphoric acids, (a4) N-alkyl sarcosine acids (such as dodecyl sarcosine acid) and N-aryl sarcosine acids, and (a5) alkyl carboxylic acids (such as oleic acid and stearic acid) and aryl carboxylic acids, and alkyl or aryl ether carboxylic acids. Note, here, that an anionic emulsifying agent formed from any of the acids listed in the (a1) and (a2) is referred to as "sulfur-based emulsifying agent", an anionic emulsifying agent formed from any of the acids listed in the (a3) is referred to as "phosphorus-based emulsifying agent", an anionic emulsifying agent formed from any of the acids listed in the (a4) is referred to as "sarcosine acid-based emulsifying agent", and an anionic emulsifying agent formed from any of the acids listed in the (a5) is referred to as "carboxylic acid-based emulsifying agent". One of such emulsifying agents may be used alone or in combination of two or more.

The drying step is a step of obtaining a powdery and/or granular material by drying the agglutinate containing the fine polymer particles (A) and the resin (B), obtained in the collecting step or in the washing step. A method of drying the agglutinate is not particularly limited, and examples thereof encompass a method involving drying the agglutinate with use of a dryer, a method involving introducing the agglutinate in a container and raising the temperature and reducing the pressure inside the container, a method involving introducing the agglutinate in a container and subjecting a dry gas and the agglutinate to countercurrent contact within the container, and the like method. The temperature at which the drying is carried out in the drying step, e.g., the temperature inside the dryer or the temperature of the dry gas, is not particularly limited. It is preferable that the temperature at which the drying is carried out is below the glass transition temperature of the shell layer of the fine polymer particles (A), because this makes it possible to obtain a powdery and/or granular material for thermosetting resin that is highly dispersible in a thermosetting resin. The temperature at which the drying is carried out in the drying step is, for example, preferably below 90°C, more preferably below 80°C, even more preferably below 70°C.

### <4-2. Production Method 2>

A method of producing a powdery and/or granular material for thermosetting resin in accordance with another embodiment of the present invention (this method may be referred to as "Production Method 2") includes: i) forming a resin (B) in an aqueous latex that contains fine polymer particles (A); ii) preparing, with use of the aqueous latex obtained in step i), an agglutinate that contains the fine polymer particles (A) and the resin (B) ; and iii) collecting the agglutinate. The fine polymer particles (A) have a graft part which is a polymer containing structural units derived from at least one type of monomer selected from the group consisting of aromatic vinyl monomers, vinyl cyanide monomers, and (meth)acrylate monomers. The resin (B) has a viscosity of not more than 1,000,000 mPa·s at 25°C.The fine polymer particles (A) is contained in an amount of 50 weight% to 99 weight% and the resin (B) is contained in an amount of 1 weight% to 50 weight%, where 100 weight% represents the total amount of the fine polymer particles (A) and the resin (B).

The following description will discuss the steps relating to the present embodiment (Production Method 2). For matters other than those detailed below, the disclosures in the [2. Powdery and/or granular material for thermosetting resin containing fine polymer particles (A) and resin (B)] section and the <4-1. Production Method 1> section apply.

As with the case of Production Method 1, Production Method 2 may further include a washing step and a drying step. Aspects of the washing step and the drying step, including preferred aspects, may be the same as those described in the <4-1. Production Method 1> section.

The step of preparing an agglutinate in each of Production Methods 1 and 2 preferably includes a step of mixing the obtained aqueous latex and an agglutinant at a temperature below the glass transition temperature of the graft part of the fine polymer particles (A). Specific examples of this step encompass (i) a step including adding a solid agglutinant to an aqueous latex that contains the fine polymer particles (A) and the resin (B) and that has a temperature below the glass transition temperature of the graft part of the fine polymer particles (A) and mixing the aqueous latex and the agglutinant or an aqueous solution of the agglutinant at a temperature below the glass transition temperature of the graft part of the fine polymer particles (A); and (ii) a step including adding, to an aqueous solution of an agglutinant having a temperature below the glass transition temperature of the graft part of the fine polymer particles (A), an aqueous latex that contains the fine polymer particles (A) and the resin (B) and mixing the aqueous latex and the agglutinant or the aqueous solution of the agglutinant at a temperature below the glass transition temperature of the graft part of the fine polymer particles (A). According to such an arrangement, it is possible to prepare an agglutinate that contains the fine polymer particles (A) and the resin (B), at a temperature below the glass transition temperature of the graft part of the fine polymer particles (A). This, in turn, makes it possible to obtain a powdery and/or granular material for thermosetting resin that is highly dispersible in a thermosetting resin (e.g., the foregoing thermosetting matrix resin (C)). Note that the "glass transition temperature of graft part" may be referred to as "glass transition temperature of shell layer" described earlier, and can be measured by the method described in the (Glass transition temperature of shell layer) section. The step of preparing an agglutinate is carried out at a temperature of, for example, below 90°C, more preferably at a temperature below 80°C, even more preferably at a temperature below 70°C.

The agglutinant is not particularly limited, provided that the agglutinant is a polymer agglutinant and/or is an aqueous solution of an inorganic acid (salt) and/or an organic acid (salt) that has the property of allowing emulsion polymerization latex to agglutinate (also referred to as coagulate or flocculate). Examples of the agglutinant encompass: (a) aqueous solution of one or more mineral salts such as sodium chloride, potassium chloride, lithium chloride, sodium bromide, potassium bromide, lithium bromide, potassium iodide, sodium iodide, potassium sulfate, sodium sulfate, ammonium sulfate, ammonium chloride, sodium nitrate, potassium nitrate, calcium chloride, ferrous sulfate, magnesium sulfate, zinc sulfate, copper sulfate, barium chloride, ferrous chloride, ferric chloride, magnesium chloride, ferric sulfate, aluminum sulfate, potassium alum, and/or iron alum; (b) aqueous solution of one or more inorganic acids such as hydrochloric acid, sulfuric acid, nitric acid, and/or phosphoric acid; (c) organic acids such as acetic acid and formic acid and aqueous solution of one or more of them; and (d) aqueous solution of one or more organic acid salts such as sodium acetate, calcium acetate, sodium formate, and/or calcium formate. The polymer agglutinant is not particularly limited, provided that the polymer agglutinant is a polymer compound containing hydrophilic group and hydrophobic group, and may be any one or more of the following: an anionic polymer agglutinant, a cationic polymer agglutinant and a nonionic polymer agglutinant. The polymer agglutinant is preferably a cationic polymer agglutinant, because this makes it possible to further improve an effect of an embodiment of the present invention. The cationic polymer agglutinant may be a polymer agglutinant that contains cationic group within its molecule, that is, a polymer agglutinant that shows cationic property when dissolved in water. Examples of such a polymer agglutinant encompass polyamines, polydicyandiamides, cationized starch, cationic poly(meth)acrylamide, water-soluble aniline resin, polythiourea, polyethyleneimine, quaternary ammonium salts, polyvinylpyridines, and chitosan. One of such compounds may be used alone or in combination of two or more as the agglutinant. A suitable agglutinant among above is aqueous solution of one or more mono- or di-valent mineral salts or mono- or di-valent inorganic acids such as sodium chloride, potassium chloride, sodium sulfate, ammonium chloride, calcium chloride, magnesium chloride, magnesium sulfate, barium chloride, hydrochloric acid, and/or sulfuric acid. A method of adding the agglutinant is not particularly limited. The agglutinant may be added at a time, added batchwise, or added continuously.

Each of Production Methods 1 and 2 may further include a step of heating the aqueous latex that contains the fine polymer particles (A), the resin (B), and the agglutinant. This step of heating may be carried out between the step of preparing an agglutinate and the step of collecting. In a case where the step of heating the aqueous latex that contains the fine polymer particles (A), the resin (B), and the agglutinant is included, this makes it possible to reduce the water content of the resulting agglutinate and/or possible to reduce the amount of fine powder contained in the resulting powdery and/or granular material. Note, here, that the temperature at which the aqueous latex that contains the fine polymer particles (A), the resin (B), and the agglutinant is heated (heating temperature) is not particularly limited, but is preferable below the glass transition temperature of the graft part of the fine polymer particles (A), because this makes it possible to obtain a powdery and/or granular material for thermosetting resin that is highly dispersible in a thermosetting resin. The heating temperature is, for example, preferably below 90°C, more preferably below 80°C, even more preferably below 70°C.

### [5. Method of producing resin composition]

A method of producing a resin composition in accordance with an embodiment of the present invention includes a step of mixing (i) any of the powdery and/or granular materials described in the [2. Powdery and/or granular material for thermosetting resin which contains fine polymer particles (A) and resin (B)] section and (ii) a thermosetting matrix resin (C). This arrangement makes it possible to obtain a resin composition having the fine polymer particles (A) well dispersed therein.

A method of producing a resin composition in accordance with another embodiment of the present invention includes a step of mixing (i) a powdery and/or granular material for thermosetting resin obtained by any of the methods of producing a powdery and/or granular material for thermosetting resin described in the [4. Method of producing powdery and/or granular material for thermosetting resin] section and (ii) a thermosetting matrix resin (C). This arrangement makes it possible to obtain a resin composition having the fine polymer particles (A) well dispersed therein.

A specific method of mixing the powdery and/or granular material for thermosetting resin with the thermosetting matrix resin (C) is not particularly limited, and is, for example, a method using a planetary centrifugal mixer. A method of mixing the powdery and/or granular material for thermosetting resin with the thermosetting matrix resin (C) is preferably, for example, a method involving carrying out mixing with use of a planetary centrifugal mixer at 2000 rpm for 40 minutes.

A method of producing a resin composition in accordance with an embodiment of the present invention may further include some other step. The method of producing a resin composition may include, in addition to the foregoing step, a step of devolatilizing/drying the obtained resin composition by heating the resin composition. Such a step can be achieved by any of various methods which are not particularly limited. Examples of such methods encompass heating and vacuum devolatilization.

### [6. Uses]

A resin composition in accordance with an embodiment of the present invention can be suitably used in applications such as: molding materials for 3D printer; adhesive agents; sealants; binders such as ink binder, wood chip binder, binder for rubber chips, foam chip binder, binder for castings, and binder for resin concrete; rock mass consolidation materials such as those for floor materials and ceramics; adhesive agents such as those for automotive interior materials, general woodworking, furniture, interior decoration, wall material, and food packaging; coating materials; fiber-reinforced composite materials; urethane foams such as automotive seats, automotive interior components, sound absorbing materials, damping materials, shock absorbers, heat insulating materials, and floor cushioning materials for construction; and the like.

### <6-1. Cured product>

A cured product in accordance with an embodiment of the present invention is a cured product produced by curing any of the resin compositions described in the [3. Resin composition which contains (i) powdery and/or granular material for thermosetting resin and (ii) thermosetting matrix resin (C)] section. In other words, a cured product in accordance with an embodiment of the present invention is obtained by curing any of the resin compositions described in the [3. Resin composition which contains (i) powdery and/or granular material for thermosetting resin and (ii) thermosetting matrix resin (C)] section. A cured product in accordance with an embodiment of the present invention has such a feature, and is thus advantageous in that the cured product shows high rigidity and high elastic modulus and also has excellent toughness and excellent adhesiveness.

A cured product in accordance with an embodiment of the present invention may be a cured product obtained by curing a resin composition produced by any of the production methods described in the [5. Method of producing resin composition] section. A cured product having such a feature is also advantageous in that the cured product shows high rigidity and high elastic modulus and also has excellent toughness and excellent adhesiveness.

A cured product obtained by curing a resin composition in accordance with an embodiment of the present invention shows high rigidity and high elastic modulus and also has excellent toughness and excellent adhesiveness, and therefore is more preferably used as, among the applications listed earlier, a structural adhesive agent, coating material, molding material for 3D printer, sealant, or fiber-reinforced composite material obtained with use of a resin composition in accordance with an embodiment of the present invention as binder for reinforcement fiber.

### <6-2. Adhesive agent>

An adhesive agent in accordance with an embodiment of the present invention is an adhesive agent that is obtained with use of any of the resin compositions described in the [3. Resin composition which contains (i) powdery and/or granular material for thermosetting resin and (ii) thermosetting matrix resin (C)] section. In other words, the adhesive agent in accordance with an embodiment of the present invention contains any of the resin compositions described in the [3. Resin composition which contains (i) powdery and/or granular material for thermosetting resin and (ii) thermosetting matrix resin (C)] section. The adhesive agent in accordance with an embodiment of the present invention includes the above feature, and thereby achieves excellent adhesiveness. An adhesive agent in accordance with an embodiment of the present invention may alternatively contain a resin composition produced by any of the production methods described in the [5. Method of producing resin composition] section. An adhesive agent in accordance with an embodiment of the present invention is preferably a structural adhesive agent.

The resin composition in accordance with an embodiment of the present invention provides good adhesiveness with respect to various adherends. Examples of adherends encompass: cold-rolled steel; aluminum; fiberglass-reinforced polyester (FRP); panels of a cured product obtained by curing a thermosetting resin, such as carbon fiber-reinforced epoxy resin; panels of a carbon fiber-reinforced thermoplastic resin sheet; sheet molding compound (SMC); ABS; PVC; polycarbonate; polypropylene; TPO; wood and glass; and the like.

A resin composition in accordance with an embodiment of the present invention provides excellent adhesion performance and excellent plasticity not only at low temperature (about -20°C) to room temperature but also at high temperature (about 80°C). Therefore, the resin composition can be suitably used as a structural adhesive agent.

The structural adhesive agent containing a resin composition in accordance with an embodiment of the present invention therefore can be used as an adhesive agent for, for example, structural components in the fields of, for example, automotive, cars (such as those of Shinkansen (bullet train) and train), civil engineering, architecture, construction material, woodworking, electricity, electronics, aircraft, aerospace industry, and the like. Specific examples of automotive-related applications encompass (i) bonding interior materials such as ceiling, door, and seat, (ii) automotive luminaire such as lamps, and (iii) bonding exterior materials such as body side molding.

### <6-3. Coating material>

A coating material in accordance with an embodiment of the present invention is a coating material that is obtained with use of any of the resin compositions described in the [3. Resin composition which contains (i) powdery and/or granular material for thermosetting resin and (ii) thermosetting matrix resin (C)] section. In other words, the coating material in accordance with an embodiment of the present invention contains any of the resin compositions described in the [3. Resin composition which contains (i) powdery and/or granular material for thermosetting resin and (ii) thermosetting matrix resin (C)] section. The coating material in accordance with an embodiment of the present invention includes the above feature, and thereby provides a coating that is highly load bearing and highly resistant to wear. A coating material in accordance with an embodiment of the present invention may alternatively contain a resin composition produced by any of the production methods described in the [5. Method of producing resin composition] section.

In a case where a resin composition in accordance with an embodiment of the present invention, as a coating material, is applied with use of a general trowel and rake, a resin (B) mixture which contains water and fine polymer particles is prepared to have a viscosity of about 500 to 9,000 cps/25°C. In a case where a roller and spray are used, the resin (B) mixture which contains water and fine polymer particles is prepared to have a viscosity of about 100 to 3,000 cps/25°C.

In a case where a resin composition in accordance with an embodiment of the present invention is applied on the floor and corridor, a generally used method of application can be employed. For example, a substrate after subjected to surface preparation is coated with a primer, and then, according to the conditions in which the application is carried out, a trowel, roller, rake, spray gun, and/or the like are used to apply the resin composition in a uniform manner. After the application, the curing of the resin composition proceeds, thereby providing a good-performance coating. The coating obtained by curing a resin composition in accordance with an embodiment of the present invention is highly load bearing and highly resistant to wear.

A substrate on which a resin composition in accordance with an embodiment of the present invention is applied is not particularly limited. Specific examples of the substrate encompass: concrete walls; concrete plates; concrete blocks; Concrete Masonry Unit (CMU); inorganic substrates such as mortar plates, ALC plates, gypsum boards (such as Dens Glass Gold manufactured by Georgia Pacific), and corrugated boards; wood-based substrates such as wood, plywood, and Oriented Strand Board (OSB); asphalt; waterproof sheets such as modified bitumen, EPDM, and TPO; plastics; organic substrates such as FRP and urethane foam insulators; and metal-based substrates such as metal panels.

A laminate, obtained by applying a resin composition in accordance with an embodiment of the present invention to a metal or porous substrate and then curing the resin composition, is particularly preferred because the substrate of such a laminate is highly protected against corrosion and the coating of the laminate is highly resistant to cracking and load.

A method of applying a coating material containing a resin composition in accordance with an embodiment of the present invention is not particularly limited. Specific examples of the method encompass known methods of application such as those using a trowel, rake, brush, roller, air spray, airless spray, or the like.

Purposes of use of a coating material containing a resin composition in accordance with an embodiment of the present invention are not particularly limited. Specific examples of the purposes of use encompass paint for automotive use, paint for electrical apparatus, paint for office equipment, paint for construction materials, paint for wood, paint for floor coating, paint for heavy duty coating, corrosion inhibitor paint for concrete, paint for coated water-proof material for housetop/roof, paint for coated water-proof material for anticorrosion/underground waterproofing, electro-deposition paint, paint for automotive refinishing, paint for can coating, paint for topcoat, paint for intercoat, paint for undercoat, paint for primer, highly weather resistant paint, and non-yellowing paint. In a case where the coating material is used in a floor coating material, paving material, or the like, the coating material can be used in a factory, laboratory, warehouse, clean room, and the like.

### <6-4. Fiber-reinforced composite material>

A composite material in accordance with an embodiment of the present invention is a composite material obtained with use of any of the resin compositions described in the [3. Resin composition which contains (i) powdery and/or granular material for thermosetting resin and (ii) thermosetting matrix resin (C)] section. In other words, the composite material in accordance with an embodiment of the present invention contains any of the resin compositions described in the [3. Resin composition which contains (i) powdery and/or granular material for thermosetting resin and (ii) thermosetting matrix resin (C)] section. The composite material in accordance with an embodiment of the present invention includes the above feature, and is thereby advantageous in that it has high toughness and high impact resistance. A composite material in accordance with an embodiment of the present invention may alternatively contain a resin composition produced by any of the production methods described in the [5. Method of producing resin composition] section.

In a case where a resin composition in accordance with an embodiment of the present invention is used in a fiber-reinforced composite material, reinforcement fiber is not particularly limited. Specific examples of the reinforcement fiber encompass glass fiber, continuous glass fiber, carbon fiber, natural fiber, metal fiber, thermoplastic resin fiber, boron fiber, aramid fiber, polyethylene fiber, and Xyron reinforced fiber. Glass fiber and carbon fiber are particularly preferred.

A method of molding a composite material containing a resin composition in accordance with an embodiment of the present invention is not particularly limited. Specific examples of the method encompass autoclave molding using prepreg, filament winding molding, hand lay-up molding, vacuum bag molding, resin transfer molding (RTM), vacuum-assisted resin transfer molding (VARTM), pultrusion molding, injection molding, sheet winding molding, spray up molding, bulk molding compound (BMC) method, and sheet molding compound (SMC) method.

In particular, in a case where the resin composition is used in a carbon fiber-reinforced composite material, preferred methods are autoclave molding using prepreg, filament winding molding, hand lay-up molding, vacuum bag molding, resin transfer molding (RTM), vacuum-assisted resin transfer molding (VARTM), and the like.

Purposes of use of a composite material containing a resin composition in accordance with an embodiment of the present invention are not particularly limited. Specific examples of the purposes of use encompass aircraft, spacecraft, automobiles, bicycles, watercraft, weapons, wind turbines, sports goods, containers, building materials, water-proof materials, printed circuit boards, and electrical insulating materials.

With regard to further details of the reinforcement fiber, method of molding, conditions under which molding is carried out, agents blended, uses, and the like of a composite material containing a resin composition in accordance with an embodiment of the present invention, any of those disclosed in the following documents can be employed: United States Patent Application Publication No. 2006/0173128, United States Patent Application Publication No. 2012/0245286, Published Japanese Translation of PCT International Application, Tokuhyo, No. 2002-530445 (WO2000/029459), Japanese Patent Application Publication, Tokukaisho, No. 55-157620 (US Patent No. 4251428), Published Japanese Translation of PCT International Application, Tokuhyo, No. 2013-504007 (WO2011/028271), Japanese Patent Application Publication, Tokukai, No. 2007-125889 (United States Patent Application Publication No.2007/0098997), and Japanese Patent Application Publication, Tokukai, No. 2003-220661 (United States Patent Application Publication No.2003 / 0134085).

### <6-5. Molding material for 3D printer>

A molding material for 3D printer, in accordance with an embodiment of the present invention, is a molding material for 3D printer obtained with use of any of the resin compositions described in the [3. Resin composition which contains (i) powdery and/or granular material for thermosetting resin and (ii) thermosetting matrix resin (C)] section. In other words, the molding material for 3D printer, in accordance with an embodiment of the present invention, contains any of the resin compositions described in the [3. Resin composition which contains (i) powdery and/or granular material for thermosetting resin and (ii) thermosetting matrix resin (C)] section. The molding material for 3D printer, in accordance with an embodiment of the present invention, includes the above feature, and is thereby advantageous in that it has high toughness and high impact resistance. A molding material for 3D printer, in accordance with an embodiment of the present invention, may alternatively contain a resin composition produced by any of the production methods described in the [5. Method of producing resin composition] section.

A molding material for 3D printer, in accordance with an embodiment of the present invention, may be referred to as "present molding material" for short.

Purposes of use of the present molding material are not particularly limited. Examples of the purposes of use encompass: goods made as samples for testing design, functions, and the like before making actual products; aircraft components, building components, and medical components.

The present molding material can be produced from a resin composition in accordance with an embodiment of the present invention with use of the resin composition in accordance with an embodiment of the present invention. A method of producing the present molding material is not particularly limited, and may be a known method.

### <6-6. Sealant>

A sealant in accordance with an embodiment of the present invention is a sealant obtained with use of any of the resin compositions described in the [3. Resin composition which contains (i) powdery and/or granular material for thermosetting resin and (ii) thermosetting matrix resin (C)] section. In other words, the sealant in accordance with an embodiment of the present invention contains any of the resin compositions described in the [3. Resin composition which contains (i) powdery and/or granular material for thermosetting resin and (ii) thermosetting matrix resin (C)] section. The sealant in accordance with an embodiment of the present invention includes the above feature, and is thereby advantageous in that it has high toughness and high impact resistance. A sealant in accordance with an embodiment of the present invention may alternatively contain a resin composition produced by any of the production methods described in the [5. Method of producing resin composition] section.

A sealant in accordance with an embodiment of the present invention may be referred to as "present sealant" for short.

Purposes of use of the present sealant are not particularly limited. Examples of the purposes of use encompass sealing for use in electrical devices such as semiconductors and in power devices.

The present sealant can be produced from a resin composition in accordance with an embodiment of the present invention with use of the resin composition in accordance with an embodiment of the present invention. A method of producing the present sealant is not particularly limited, and may be a known method.

### <6-7. Electronic substrate>

An electronic substrate in accordance with an embodiment of the present invention is an electronic substrate obtained with use of any of the resin compositions described in the [3. Resin composition which contains (i) powdery and/or granular material for thermosetting resin and (ii) thermosetting matrix resin (C)] section. In other words, the electronic substrate in accordance with an embodiment of the present invention contains any of the resin compositions described in the [3. Resin composition which contains (i) powdery and/or granular material for thermosetting resin and (ii) thermosetting matrix resin (C)] section. The electronic substrate in accordance with an embodiment of the present invention includes the above feature, and is thereby advantageous in that it has high toughness and high impact resistance. An electronic substrate in accordance with an embodiment of the present invention may alternatively contain a resin composition produced by any of the production methods described in the [5. Method of producing resin composition] section. The electronic substrate in accordance with an embodiment of the present invention includes the above feature, and is thereby advantageous in that it has high toughness and high impact resistance.

An electronic substrate in accordance with an embodiment of the present invention may be referred to as "present electronic substrate" for short.

Purposes of use of the present electronic substrate are not particularly limited. Examples of the purposes of use encompass printed circuits, printed wiring, printed circuit boards, products provided with a printed circuit therein, printed wiring boards, and printed boards.

The present electronic substrate can be produced from a resin composition in accordance with an embodiment of the present invention with use of the resin composition in accordance with an embodiment of the present invention. A method of producing the present electronic substrate is not particularly limited, and may be a known method.

### Examples

The following description will discuss an embodiment of the present invention in detail with reference to Examples and Comparative Examples. Note that the present invention is not limited to these examples. The following Examples can be altered as appropriate. Note that in the following Examples and Comparative Examples, "parts" means "parts by weight", and "%" means "weight%"

### <Evaluation Methods>

First, the following description will discuss methods of evaluating the resin compositions produced in the Examples and Comparative Examples.

### (Measurement of average particle size)

The volume-average particle size (Mv) of elastic core layer and fine polymer particles (A) dispersed in aqueous latex was measured with use of the Nanotrac WaveII-EX150 (manufactured by MicrotracBEL Corp.). A specimen used for measurement was prepared by diluting aqueous latex in deionized water. When making measurements, refractive index of water and refractive indices of elastic core layer and fine polymer particles in each aqueous latex were inputted, measurement time was set to 120 seconds, and the concentration of the specimen was adjusted such that the load index fell within the range of 1 to 10.

### (Differential scanning calorimetry (DSC) of resin (B) in aqueous emulsion of resin (B)

Each of the resins (B) contained in respective aqueous emulsions of resins (B) was subjected to DSC at a heating rate of 10°C/min with use of a DSC7020 (manufactured by Hitachi High-Tech Science Corporation), and showed an endothermic peak at the following temperature.
- Epoxy contained in W2821R70 (E-1) showed an endothermic peak at -15.0°C.
- Epoxy contained in W3435R67 (E-2) showed an endothermic peak at -3.6°C.
- Epoxy contained in W1155R55 (E-3) showed an endothermic peak at 33.3°C.
- ADK CIZER O-130P (E-4) showed an endothermic peak at -6.96°C.
- ADK CIZER O-180A (E-5) showed an endothermic peak at -17.0°C.
- EPON863 (E-6) showed an endothermic peak at -20.92°C
- Eterset2010 (E-7) showed an endothermic peak at - 23.66°C.
- Resin contained in E-8 showed an endothermic peak at - 52.8°C.
- Resin contained in E-9 showed an endothermic peak at - 51.5°C.
- Resin contained in E-10 showed an endothermic peak at - 33.1°C.
- Resin contained in E-11 showed an endothermic peak at - 50.9°C.
- Resin contained in E-12 showed an endothermic peak at - 31.5°C.
- Resin contained in E-13 showed an endothermic peak at 54.4°C.
- Resin contained in E-14 showed an endothermic peak at 46.9°C.

### (Measurement of viscosity of resin (B) in aqueous emulsion of resin (B))

Each of the resins (B) contained in respective aqueous emulsions of resins (B) was measured for its viscosity at a measurement temperature of 25°C using a digital viscometer DV-II+Pro manufactured by BROOKFIELD and also using a spindle CPE-52 for some viscosity ranges, under the conditions in which shear rate was changed as necessary. The following are the results of the measurements.
- Epoxy contained in W2821R70 (E-1) had a viscosity of 12,000 mPa·s.
- Epoxy contained in W3435R67 (E-2) had a viscosity of 714,000 mPa·s.

- ADK CIZER O-130P (E-4) had a viscosity of 373 mPa·s.
- ADK CIZER O-180A (E-5) had a viscosity of 865 mPa·s.
- EPON863 (E-6) had a viscosity of 3,772 mPa·s.
- Eterset2010 (E-7) had a viscosity of 1,081 mPa·s.
- Resin contained in E-8 had a viscosity of 8,567 mPa·s.
- Resin contained in E-9 had a viscosity of 23,337 mPa·s.
- Resin contained in E-10 had a viscosity of 314,000 mPa·s.
- Resin contained in E-11 had a viscosity of 32,862 mPa·s.
- Resin contained in E-12 had a viscosity of 337,000m Pa·s.

Note that the epoxy contained in W1155R55 (E-3), the resin contained in E-13, and the resin contained in E-14 are in solid state, and therefore could not be measured for their viscosity.

### (Dispersibility of powdery and/or granular material in resin composition)

A resin composition was placed on a grindometer, a powdery and/or granular material on a gauge was scraped with use of a metal scraper, and the state of dispersion was visually checked. The point on the scale of the grindometer, at which there are five to ten particles (which became apparent by the scraping) within a range 3 mm in width, was read.

### (Anti-blocking property of powdery and/or granular material)

30 g of a powdery and/or granular material was placed in a cylindrical container 50 mm in diameter, a weight of 6.3 kg was placed on the powdery and/or granular material so that a load of 6.3 kg would be applied on the powdery and/or granular material, allowed to stand at 60°C for 2 hours, and then the powdery and/or granular material in the form of a block was removed from the container. A force required to break this block was measured with use of a rheometer.

### (TEM image)

Each of the powdery and/or granular materials (powder) obtained in Production Examples 4-1 and 4-3 (described later) was frozen, and then sliced with use of a ultramicrotome to obtain a slice sample having a thickness of 100 nm. The sample was stained with osmium oxide (OsO₄), and then observed for its structure with use of a transmission electron microscope (TEM) (H-7650, manufactured by Hitachi High-technologies Corporation) at an accelerating voltage of 100 kV.

### <1. Formation of core layer>

### (Production Example 1-1: Preparation of polybutadiene rubber latex (R-1))

Into a pressure-resistant polymerization apparatus were introduced 200 parts by weight of deionized water, 0.03 parts by weight of tripotassium phosphate, 0.002 parts by weight of disodium ethylenediaminetetraacetate (EDTA), 0.001 parts by weight of ferrous sulfate heptahydrate, and 1.55 parts by weight of sodium dodecylbenzenesulfonate (SDBS). While the materials thus introduced were stirred, the headspace of the pressure-resistant polymerization apparatus was sufficiently replaced with nitrogen, so as to remove oxygen from the inside of the pressure-resistant polymerization apparatus. Next, 100 parts by weight of butadiene (Bd) was introduced into the pressure-resistant polymerization apparatus, and the temperature inside the pressure-resistant polymerization apparatus was raised to 45°C. Next, 0.03 parts by weight of paramenthane hydroperoxide (PHP) and 0.10 parts by weight of sodium formaldehyde sulfoxylate (SFS) were introduced into the pressure-resistant polymerization apparatus, and polymerization was commenced. After 3 hours, 5 hours, and 7 hours from the start of the polymerization, 0.025 parts by weight of paramenthane hydroperoxide (PHP) was introduced into the pressure-resistant polymerization apparatus. Furthermore, after 4, 6, and 8 hours from the start of the polymerization, 0.0006 parts by weighs of EDTA and 0.003 parts by weight of ferrous sulfate heptahydrate were introduced into the pressure-resistant polymerization apparatus. After 15 hours from the start of polymerization, residual monomers were removed by devolatilization under reduced pressure, and the polymerization was ended. In this way, aqueous latex (R-1), containing elastic core layer containing polybutadiene rubber as a main component, was obtained. The volume-average particle size of the elastic core layer of fine polymer particles contained in the obtained aqueous latex (R-1) was 90 nm.

### (Production Example 1-2: Preparation of polybutadiene rubber latex (R-2))

Into a pressure-resistant polymerization apparatus were introduced 7 parts by weight (in terms of solid content) of the obtained aqueous latex (R-1) containing elastic core layer containing polybutadiene rubber as a main component, 200 parts by weight of deionized water, 0.03 parts by weight of tripotassium phosphate, 0.002 parts by weight of EDTA, and 0.001 parts by weight of ferrous sulfate heptahydrate. While the materials thus introduced were stirred, the headspace of the pressure-resistant polymerization apparatus was sufficiently replaced with nitrogen, so as to remove oxygen from the inside of the pressure-resistant polymerization apparatus. Next, 93 parts by weight of Bd was introduced into the pressure-resistant polymerization apparatus, and the temperature inside the pressure-resistant polymerization apparatus was raised to 45°C. 0.02 parts by weight of PHP, and subsequently 0.10 parts by weight of SFS, were introduced into the pressure-resistant polymerization apparatus, and polymerization was commenced. At three-hour intervals from the start of the polymerization to 24 hours after the start of the polymerization, 0.025 parts by weight of PHP, 0.0006 parts by weight of EDTA, and 0.003 parts by weight of ferrous sulfate heptahydrate were introduced into the pressure-resistant polymerization apparatus. After 30 hours from the start of polymerization, residual monomers were removed by devolatilization under reduced pressure, and the polymerization was ended. In this way, aqueous latex (R-2), containing elastic core layer containing polybutadiene rubber as a main component, was obtained. The volume-average particle size of the elastic core layer of fine polymer particles contained in the obtained aqueous latex (R-2) was 195 nm.

### <2. Preparation of fine polymer particles (A) (formation of shell layers)>

### (Production Example 2-1: Preparation of core-shell polymer latex (aqueous latex: L-1))

Into a glass reaction vessel equipped with a thermometer, a stirrer, a reflux condenser, a nitrogen inlet, and a monomer adding device were introduced 215 parts by weight of the obtained aqueous latex (R-2) containing elastic core layer containing polybutadiene rubber as a main component (equivalent to 70 parts by weight of polybutadiene fine polymer particles) and 82 parts by weight of deionized water. The materials thus introduced in the glass reaction vessel were stirred at 60°C while the headspace of the glass reaction vessel was replaced with nitrogen. Next, 2.6 parts by weight of 1,3-bytylene glycol dimethacrylate and 0.007 parts by weight of t-butylhydroperoxide (BHP) were added into the glass reaction vessel, and the reaction mixture was stirred for 10 minutes. Next, 0.004 parts by weight of EDTA, 0.001 parts by weight of ferrous sulfate heptahydrate, and 0.13 parts by weight of SFS were added into the glass reaction vessel, and the reaction mixture was stirred for 30 minutes. Next, 0.013 parts by weight of BHP was added to the glass reaction vessel, and the reaction mixture was stirred for another 30 minutes. Next, a mixture of 28.5 parts by weight of methyl methacrylate (MMA), 1.5 parts by weight of butyl acrylate (BA), and 0.085 parts by weight of BHP was added continuously into the glass reaction vessel over 120 minutes. Thereafter, 0.013 parts by weight of BHP was added into the glass reaction vessel, and the reaction mixture was stirred for another hour to finish polymerization. In this way, aqueous latex (L-1) containing fine polymer particles (A) was obtained. 99% or more of the monomer component had been polymerized. The volume-average particle size of the fine polymer particles contained in the aqueous latex (L-1) was 200 nm.

### (Production Example 2-2: Preparation of core-shell polymer latex (aqueous latex: L-2))

Into a glass reaction vessel equipped with a thermometer, a stirrer, a reflux condenser, a nitrogen inlet, and a monomer adding device were introduced 215 parts by weight of the obtained aqueous latex (R-2) containing elastic core layer containing polybutadiene rubber as a main component (equivalent to 70 parts by weight of polybutadiene fine polymer particles) and 82 parts by weight of deionized water. The materials thus introduced in the glass reaction vessel were stirred at 60°C while the headspace of the glass reaction vessel was replaced with nitrogen. Next, 0.004 parts by weight of EDTA, 0.001 parts by weight of ferrous sulfate heptahydrate, and 0.13 parts by weight of SFS were added into the glass reaction vessel, and a mixture of 28.5 parts by weight of MMA, 1.5 parts by weight of BA, and 0.085 parts by weight of BHP was added continuously into the glass reaction vessel over 120 minutes. Next, 0.013 parts by weight of BHP was added into the glass reaction vessel, the reaction mixture was stirred for another hour, and the polymerization was finished. In this way, aqueous latex (L-2) containing fine polymer particles (A) was obtained. 99% or more of the monomer component had been polymerized. The volume-average particle size of fine the polymer particles contained in the aqueous latex (L-2) was 200 nm.

### <3. Preparation of anti-blocking agent>

### (Production Example 3-1: Preparation of anti-blocking agent latex (aqueous latex: B-1))

Into a glass reaction vessel equipped with a thermometer, a stirrer, a reflux condenser, a nitrogen inlet, and a monomer adding device were introduced 200 parts by weight of deionized water, 0.03 parts by weight of sodium dihydrogen phosphate, and 0.065 parts by weight of SDBS. While the materials thus introduced in the glass reaction vessel were stirred, the headspace of the vessel was sufficiently replaced with nitrogen, so as to remove oxygen from the glass reaction vessel. Next, 4.75 parts by weight of MMA and 0.25 parts by weight of styrene (St) were introduced into the glass reaction vessel, and 0.008 parts by weight of EDTA, 0.002 parts by weight of ferrous sulfate heptahydrate, 0.2 parts by weight of SFS, and 0.017 parts by weight of BHP were introduced into the glass reaction vessel. Thereafter, a mixture of 76 parts by weight of MMA, 4 parts by weight of St, and 0.343 parts by weight of BHP was added continuously over 165 minutes. Next, a mixture of 12.5 parts by weight of MMA, 2.5 parts by weight of 1,3-bytylene glycol dimethacrylate, and 0.1 parts by weight of BHP was added continuously into the glass reaction vessel over 45 minutes. The reaction mixture was stirred for another hour, and the polymerization was finished. In this way, aqueous latex (B-1) containing fine polymer particles was obtained. 99% or more of the monomer component had been polymerized. The volume-average particle size of the fine polymer particles contained in the obtained aqueous latex (B-1) was 175 nm.

### <4. Preparation of powdery and/or granular material>

### (Production Example 4-1: Preparation of powdery and/or granular material (P-1))

333 parts by weight of the aqueous latex (L-1) (equivalent to 100 parts by weight of the fine polymer particles (A)), 8.8 parts by weight of an aqueous emulsion of liquid-state epoxy resin W2821R70 (E-1) (which is resin (B)) (manufactured by Mitsubishi Chemical Corporation, solid content concentration: 70 weight%, epoxy resin content: 60%) (equivalent to 5.3 parts by weight of epoxy resin), and 1.1 parts by weight of Irganox 1135 (octyl 3-(4-hydroxy-3,5-diisopropylphenyl) propionate, manufactured by BASF Japan Ltd.) (which is an antioxidant) were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate (flocculate). Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-1) was obtained.

### (Production Example 4-2: Preparation of powdery and/or granular material (P-2))

333 parts by weight of the aqueous latex (L-1) (equivalent to 100 parts by weight of the fine polymer particles (A)), 10.4 parts by weight of aqueous epoxy resin emulsion W3435R67 (E-2) (which is resin (B)) (manufactured by Mitsubishi Chemical Corporation, solid content concentration: 67 weight%, epoxy resin content: 51%) (equivalent to 5.3 parts by weight of epoxy resin), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-2) was obtained.

### (Production Example 4-3: Preparation of powdery and/or granular material (P-3))

333 parts by weight of the aqueous latex (L-1) (equivalent to 100 parts by weight of the fine polymer particles (A)), 10.6 parts by weight of aqueous epoxy resin emulsion W1155R55 (E-3) (which is resin (B)) (manufactured by Mitsubishi Chemical Corporation, solid content concentration: 55 weight%, epoxy resin content: 50%) (equivalent to 5.3 parts by weight of epoxy resin), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-3) was obtained.

### (Production Example 4-4: Preparation of powdery and/or granular material (P-4))

333 parts by weight of the aqueous latex (L-1) (equivalent to 100 parts by weight of the fine polymer particles (A)) and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-4) was obtained.

### (Production Example 4-5: Preparation of powdery and/or granular material (P-5))

333 parts by weight of the aqueous latex (L-1) (equivalent to 100 parts by weight of the fine polymer particles (A)), 5.1 parts by weight of aqueous epoxy resin emulsion W2821R70 (E-1) (which is resin (B)) (equivalent to 3.1 parts by weight of epoxy resin), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-5) was obtained.

### (Production Example 4-6: Preparation of powdery and/or granular material (P-6))

333 parts by weight of the aqueous latex (L-1) (equivalent to 100 parts by weight of the fine polymer particles (A)), 5.1 parts by weight of aqueous epoxy resin emulsion W2821R70 (E-1) (which is resin (B)) (equivalent to 3.1 parts by weight of epoxy resin), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, 5 parts by weight of the aqueous latex (B-1) (equivalent to 1.5 parts by weight of fine polymer particles) was introduced to the obtained mixture, and the mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-6) was obtained.

### (Production Example 4-7: Preparation of powdery and/or granular material (P-7))

333 parts by weight of the aqueous latex (L-2) (equivalent to 100 parts by weight of the fine polymer particles (A)), 5.1 parts by weight of an aqueous emulsion of liquid-state epoxy resin W2821R70 (E-1) (which is resin (B)) (equivalent to 3.1 parts by weight of epoxy resin), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-7) was obtained.

### (Production Example 4-8: Preparation of powdery and/or granular material (P-8))

Water, epoxidized soybean oil (ADK CIZER O-130P manufactured by ADEKA CORPORATION) (which is resin (B)), and SDBS (which is an emulsifying agent) were mixed with use of a homogenizer. With this, the resin (B) was emulsified to give aqueous emulsion (E-4) (epoxy resin content: 50%). Next, 333 parts by weight of the aqueous latex (L-1) (equivalent to 100 parts by weight of the fine polymer particles (A)), 10.6 parts by weight of the aqueous emulsion (E-4) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-8) was obtained.

### (Production Example 4-9: Preparation of powdery and/or granular material (P-9))

Water, epoxidized linseed oil (ADK CIZER O-180A manufactured by ADEKA CORPORATION) (which is resin (B)), and SDBS (which is an emulsifying agent) were mixed with use of a homogenizer. With this, the resin (B) was emulsified to give aqueous emulsion (E-5) (epoxy resin content: 50%). Next, 333 parts by weight of the aqueous latex (L-1) (equivalent to 100 parts by weight of the fine polymer particles (A)), 10.6 parts by weight of the aqueous emulsion (E-5) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-9) was obtained.

### (Production Example 4-10: Preparation of powdery and/or granular material (P-10))

Water, bisphenol F epoxy resin (EPON863 manufactured by HEXION) (which is resin (B)), and SDBS (which is an emulsifying agent) were mixed together with use of a homogenizer. With this, the resin (B) was emulsified to give aqueous emulsion (E-6) (epoxy resin content: 50%). Next, 333 parts by weight of the aqueous latex (L-1) (equivalent to 100 parts by weight of the fine polymer particles (A)), 10.6 parts by weight of the aqueous emulsion (E-6) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-10) was obtained.

### (Production Example 4-11: Preparation of powdery and/or granular material (P-11))

Water, unsaturated polyester resin (Eterset2010 manufactured by Eternal) (which is resin (B)), and SDBS (which is an emulsifying agent) were mixed together with use of a homogenizer. With this, the resin (B) was emulsified to give aqueous emulsion (E-7) (resin content: 50%). Next, 333 parts by weight of the aqueous latex (L-1) (equivalent to 100 parts by weight of the fine polymer particles (A)), 10.6 parts by weight of the aqueous emulsion (E-7) (equivalent to 5.3 parts by weight of resin (B)), and 1.1 parts by weight of Irganox 1135 (which is an antioxidant) were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-11) was obtained.

### (Production Example 4-12: Preparation of powdery and/or granular material (P-12))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 100 parts by weight of BA, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-8) containing resin (B) was obtained. 99% or more of the monomer component had been polymerized. The volume-average particle size of the resin (B) contained in the aqueous emulsion (E-8) was 80 nm, and the solid content concentration (concentration of resin (B)) of the aqueous emulsion (E-8) was 33%. Next, 333 parts by weight of the aqueous latex (L-1) (equivalent to 100 parts by weight of the fine polymer particles (A)), 16.1 parts by weight of the aqueous emulsion (E-8) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-12) was obtained.

### (Production Example 4-13: Preparation of powdery and/or granular material (P-13))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 90 parts by weight of BA, 10 parts by weight of MMA, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-9) containing resin (B) was obtained. 99% or more of the monomer component had been polymerized. The volume-average particle size of the resin (B) contained in the aqueous emulsion (E-9) was 80 nm, and the solid content concentration (concentration of resin (B)) of the aqueous emulsion (E-9) was 33%. Next, 333 parts by weight of the aqueous latex (L-1) (equivalent to 100 parts by weight of the fine polymer particles (A)), 16.1 parts by weight of the aqueous emulsion (E-9) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-13) was obtained.

### (Production Example 4-14: Preparation of powdery and/or granular material (P-14))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 70 parts by weight of BA, 30 parts by weight of MMA, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-10) containing resin (B) was obtained. 99% or more of the monomer component had been polymerized. The volume-average particle size of the resin (B) contained in the aqueous emulsion was 80 nm, and the solid content concentration (concentration of resin (B)) of the aqueous emulsion was 33%. Next, 333 parts by weight of the aqueous latex (L-1) (equivalent to 100 parts by weight of the fine polymer particles (A)), 16.1 parts by weight of the aqueous emulsion (E-10) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-14) was obtained.

### (Production Example 4-15: Preparation of powdery and/or granular material (P-15))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 90 parts by weight of BA, 10 parts by weight of St, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-11) containing resin (B) was obtained. 99% or more of the monomer component had been polymerized. The volume-average particle size of the resin (B) contained in the aqueous emulsion was 80 nm, and the solid content concentration (concentration of resin (B)) of the aqueous emulsion was 33%. Next, 333 parts by weight of the aqueous latex (L-1) (equivalent to 100 parts by weight of the fine polymer particles (A)), 16.1 parts by weight of the aqueous emulsion (E-11) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-15) was obtained.

### (Production Example 4-16: Preparation of powdery and/or granular material (P-16))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 70 parts by weight of BA, 30 parts by weight of St, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-12) containing resin (B) was obtained. 99% or more of the monomer component had been polymerized. The volume-average particle size of the resin (B) contained in the aqueous emulsion was 80 nm, and the solid content concentration (concentration of resin (B)) of the aqueous emulsion was 33%. Next, 333 parts by weight of the aqueous latex (L-1) (equivalent to 100 parts by weight of the fine polymer particles (A)), 16.1 parts by weight of the aqueous emulsion (E-12) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-16) was obtained.

### (Production Example 4-17: Preparation of powdery and/or granular material (P-17))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 10 parts by weight of BA, 90 parts by weight of MMA, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-13) containing resin (B) was obtained. 99% or more of the monomer component had been polymerized. The volume-average particle size of the resin (B) contained in the aqueous emulsion was 80 nm, and the solid content concentration (concentration of resin (B)) of the aqueous emulsion was 33%. Next, 333 parts by weight of the aqueous latex (L-1) (equivalent to 100 parts by weight of the fine polymer particles (A)), 16.1 parts by weight of the aqueous emulsion (E-13) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-17) was obtained.

### (Production Example 4-18: Preparation of powdery and/or granular material (P-18))

Into a glass reaction vessel equipped with a thermometer, a stirrer, a reflux condenser, a nitrogen inlet, and a monomer adding device were introduced 220 parts by weight of deionized water, 0.9 parts of polyoxyethylene lauryl ether phosphate, and 0.1 parts of sodium hydroxide. While the materials thus introduced were stirred at 68°C, the headspace of the glass reaction vessel was sufficiently replaced with nitrogen, so as to remove oxygen from the glass reaction vessel. Next, a mixture of 10 parts by weight of BA, 90 parts by weight of St, 7.0 parts by weight of 2-ethylhexyl thioglycolate, and 1.0 part by weight of BHP was added continuously into the glass reaction vessel over 300 minutes. Next, 0.05 parts by weight of BHP was added into the glass reaction vessel, and the reaction mixture was stirred for another hour to finish polymerization. Through these operations, aqueous emulsion (E-14) containing resin (B) was obtained. 99% or more of the monomer component had been polymerized. The volume-average particle size of the resin (B) contained in the aqueous emulsion was 80 nm, and the solid content concentration (concentration of resin (B)) of the aqueous emulsion was 33%. Next, 333 parts by weight of the aqueous latex (L-1) (equivalent to 100 parts by weight of the fine polymer particles (A)), 16.1 parts by weight of the aqueous emulsion (E-14) (equivalent to 5.3 parts by weight of resin (B)), and 1.1 parts by weight of Irganox 1135 were mixed to obtain an aqueous latex. The obtained aqueous latex was introduced into 600 parts of ion exchanged water having 4 parts of calcium chloride dissolved therein and having its temperature controlled to 70°C, and the fine polymer particles (A) and the resin (B) were allowed to agglutinate. Then, the obtained mixture was subjected to centrifugal dehydration to obtain wet powder. Two cycles of the operation of introducing the obtained wet powder into 500 parts of ion exchanged water and the operation of subjecting the obtained mixture to centrifugal dehydration were carried out in total, and, lastly, the wet powder was dried in a dryer at 50°C for 48 hours. In this way, powdery and/or granular material (P-18) was obtained.

The formulas of the foregoing powdery and/or granular materials (P-1) to (P-18) are as shown in Table 1. Note that the amounts stated in the "Fine polymer particles (A)" row in Table 1 are not the amounts of aqueous latexes added but the amounts equivalent to fine polymer particles (A) (in parts by weight).

**[Table 1]**

| | | Powdery and/or granular material | | | | | | | | | | | | | | | | | |
|---|---|---|---|---|---|---|---|---|---|---|---|---|---|---|---|---|---|---|---|
| | | P-1 | P-2 | P-3 | P-4 | P-5 | P-6 | P-7 | P-8 | P-9 | P-10 | P-11 | P-12 | P-13 | P-14 | P-15 | P-16 | P-17 | P-18 |
| Fine polymer particles (A) | L-1 (surface-crosslinked) | 100 | 100 | 100 | 100 | 100 | 100 | | 100 | 100 | 100 | 100 | 100 | 100 | 100 | 100 | 100 | 100 | 100 |
| | L-2 (not surface-crosslinked) | | | | | | | 100 | | | | | | | | | | | |
| Aqueous emulsion containing resin (B) (The amount of resin (B) contained in aqueous emulsion: parts by weight) | W2821R70 (E-1) | 5.3 | | | | 3.1 | 3.1 | 3.1 | | | | | | | | | | | |
| | W3435R67 (E-2) | | 5.3 | | | | | | | | | | | | | | | | |
| | W1155R55 (E-3) | | | 5.3 | | | | | | | | | | | | | | | |
| | E-4 | | | | | | | | 5.3 | | | | | | | | | | |
| | E-5 | | | | | | | | | 5.3 | | | | | | | | | |
| | E-6 | | | | | | | | | | 5.3 | | | | | | | | |
| | E-7 | | | | | | | | | | | 5.3 | | | | | | | |
| | E-8 | | | | | | | | | | | | 5.3 | | | | | | |
| | E-9 | | | | | | | | | | | | | 5.3 | | | | | |
| | E-10 | | | | | | | | | | | | | | 5.3 | | | | |
| | E-11 | | | | | | | | | | | | | | | 5.3 | | | |
| | E-12 | | | | | | | | | | | | | | | | 5.3 | | |
| | E-13 | | | | | | | | | | | | | | | | | 5.3 | |
| | E-14 | | | | | | | | | | | | | | | | | | 5.3 |
| Anti-blocking agent | B-1 | | | | | | 1.5 | | | | | | | | | | | | |
| Antioxidant | Irganox 1135 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |

In the "Fine polymer particles (A)" row in Table 1, "surface-crosslinked" means that there is an intermediate layer, and that the fine polymer particles (A) (L-1) include an intermediate layer. In the "Fine polymer particles (A)" row in Table 1, "not surface-crosslinked" means that there is no intermediate layer, and that the fine polymer particles (A) (L-2) do not include an intermediate layer.

The powdery and/or granular materials (P-1) to (P-18) were evaluated for their anti-blocking properties. The results are shown in Table 2. Furthermore, in accordance with the formulas shown in Table 2, JER828 (manufactured by Mitsubishi Chemical Corporation, bisphenol A epoxy resin) and each of the powdery and/or granular materials (P-1) to (P-18) were weighed out and mixed with use of a planetary centrifugal mixer at 2000 rpm for 40 minutes. In this way, resin compositions (Examples 1 to 14 and Comparative Examples 1 to 4) were obtained. Each of the obtained resin compositions was evaluated for dispersibility of the powdery and/or granular material. The results are shown in Table 2. Note that, with regard to Examples 3 and 4, the dispersibility of the powdery and/or granular material in the resin composition obtained by carrying out mixing with use of a planetary centrifugal mixer at 2000 rpm for 30 minutes was also evaluated. The results are shown in Table 2. Furthermore, TEM images of Example 1 and Comparative Example 1 were obtained and, with use of these images, the number of domains in each of which the longitudinal dimension of the resin (B) is not less than 1.5 times the average particle size of the fine polymer particles (A) was evaluated.

**[Table 2]**

| Composition (parts by weight) | | Examples | | | | | | | | | | | | | | Comparative Examples | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 |
| Thermosetting matrix resin (C) | JER828 | 95 | 95 | 95 | 95 | 95 | 95 | 95 | 95 | 95 | 95 | 95 | 95 | 95 | 95 | 95 | 95 | 95 | 95 |
| Powdery and/or granular material | P-1 | 5 | | | | | | | | | | | | | | | | | |
| | P-2 | | 5 | | | | | | | | | | | | | | | | |
| | P-3 | | | | | | | | | | | | | | | 5 | | | |
| | P-4 | | | | | | | | | | | | | | | | 5 | | |
| | P-5 | | | 5 | | | | | | | | | | | | | | | |
| | P-6 | | | | 5 | | | | | | | | | | | | | | |
| | P-7 | | | | | 5 | | | | | | | | | | | | | |
| | P-8 | | | | | | 5 | | | | | | | | | | | | |
| | P-9 | | | | | | | 5 | | | | | | | | | | | |
| | P-10 | | | | | | | | 5 | | | | | | | | | | |
| | P-11 | | | | | | | | | 5 | | | | | | | | | |
| | P-12 | | | | | | | | | | 5 | | | | | | | | |
| | P-13 | | | | | | | | | | | 5 | | | | | | | |
| | P-14 | | | | | | | | | | | | 5 | | | | | | |
| | P-15 | | | | | | | | | | | | | 5 | | | | | |
| | P-16 | | | | | | | | | | | | | | 5 | | | | |
| | P-17 | | | | | | | | | | | | | | | | | 5 | |
| | P-18 | | | | | | | | | | | | | | | | | | 5 |
| Dispersibility evaluation (µm) | 30 minutes of mixing | | | ≥100 | 0 | | | | | | | | | | | | | | |
| | 40 minutes of mixing | 0 | 0 | 0 | 0 | 70 | 0 | 0 | 0 | 0 | 0 | 0 | 0 | 0 | 0 | ≥100 | ≥100 | ≥100 | ≥100 |
| Anti-blocking property(Pa) | | 12000 | 20000 | 6250 | 2900 | 15000 | 9600 | 9600 | 9900 | 9700 | 10500 | 11400 | 14800 | 12200 | 15300 | 9500 | 4300 | 9000 | 9200 |
| Number of domains of resin (B) | | 0 | | | | | | | | | | | | | | 10 | | | |

### <Results>

Table 2 indicates that the powdery and/or granular materials used in Examples 1 to 14 have better dispersibility than the powdery and/or granular materials used in Comparative Examples 1 to 4.

A comparison between Example 3 and Example 5 indicates that Example 3, which contains a powdery and/or granular material having an intermediate layer, has better dispersibility and better anti-blocking property than Example 5 containing a powdery and/or granular material having no intermediate layer.

A comparison between Example 3 and Example 4 indicates that Example 4, which contains a powdery and/or granular material containing an anti-blocking agent, has not only better anti-blocking property but also better dispersibility than Example 3 containing a powdery and/or granular material containing no anti-blocking agent.

It is apparent from Example 1 and Comparative Example 1 that a powdery and/or granular material in which the number of domains in each of which the longitudinal dimension of the resin (B) is not less than 1.5 times the average particle size of the fine polymer particles (A) (domains are measured by TEM) is not more than five has excellent dispersibility.

Fig. 1 is a TEM image (×40,000) of a cross section of the powdery and/or granular material of Example 1, and Fig. 2 is a TEM image (×40,000) of a cross section of the powdery and/or granular material of Comparative Example 1. Figs. 1 and 2 indicate that the powdery and/or granular material of Example 1 is such that fine polymer particles (A) 10 are closely packed and that the resin (B) 20 is uniformly dispersed as compared to the powdery and/or granular material of Comparative Example 1. Furthermore, white areas where both the fine polymer particles (A) and the resin (B) are absent are small. This indicates that the powdery and/or granular material of Example 1 has better dispersibility than Comparative Example 1.

### Industrial Applicability

A thermosetting resin composition in accordance with an embodiment of the present invention is suitably used in applications such as: molding materials for 3D printer; adhesive agents; sealants; ink binder, wood chip binder, binder for rubber chips; foam chip binder, binder for castings; rock mass consolidation materials such as those for floor materials and ceramics; adhesive agents such as those for automotive interior materials, general woodworking, furniture, interior decoration, wall material, and food packaging; coating materials; fiber-reinforced composite materials; urethane foams such as automotive seats, automotive interior components, sound absorbing materials, damping materials, shock absorbers, heat insulating materials, and floor cushioning materials for construction; and the like.

### Reference Signs List

- 1: powdery and/or granular material
- 10: fine polymer particle (A)
- 20: domain of resin (B)

## Claims

1. A powdery and/or granular material for thermosetting resin, comprising:
fine polymer particles (A) having a polymer grafted therein, the polymer containing at least one type of monomer unit selected from the group consisting of aromatic vinyl monomers, vinyl cyanide monomers, and (meth)acrylate monomers; and
a resin (B) having a viscosity, measured in accordance with the description, of not more than 1,000,000 mPa·s at 25°C,
wherein the fine polymer particles (A) are contained in an amount of 70 weight% to 99 weight% and the resin (B) is contained in an amount of 1 weight% to 30 weight%, where 100 weight% represents a total amount of the fine polymer particles (A) and the resin (B),
the fine polymer particles (A) have a core-shell structure including a core layer and a shell layer; and
the fine polymer particles (A) include, in the core layer, a polymer that contains at least one type of monomer unit selected from the group consisting of diene-based rubbers, (meth)acrylate-based rubbers, and organosiloxane-based rubbers.

2. The powdery and/or granular material according to claim 1, wherein the resin (B) is a resin whose differential scanning calorimetry (DSC) thermogram shows an endothermic peak, measured in accordance with the description, at 25°C or below.

3. The powdery and/or granular material according to claim 1 or 2, wherein the resin (B) contains a thermosetting resin.

4. The powdery and/or granular material according to claim 1 or 2, wherein the resin (B) contains a thermoplastic resin.

5. The powdery and/or granular material according to any one of claims 1 to 4, wherein the number of domains measured by transmission electron microscopy (TEM), using a technique in accordance with the description, is not more than five, the domains being domains in each of which a longitudinal dimension of the resin (B) is not less than 1.5 times an average particle size of the fine polymer particles (A).

6. The powdery and/or granular material according to any one of claims 1 to 5, wherein: the fine polymer particles (A) include an intermediate layer between the core layer and the shell layer; and the intermediate layer contains a rubber surface-crosslinked layer.

7. The powdery and/or granular material according to any one of claims 1 to 6, further comprising an anti-blocking agent in an amount of 0.01 weight% to 5.0 weight%.

8. A resin composition comprising:
a powdery and/or granular material for thermosetting resin according to any one of claims 1 to 7; and
a thermosetting matrix resin (C).

9. The resin composition according to claim 8, wherein the thermosetting matrix resin (C) is at least one selected from the group consisting of ethylenically unsaturated monomers, epoxy resins, phenolic resins, polyol resins, and amino-formaldehyde resins.

10. A cured product which is produced by curing a resin composition according to claim 8 or 9.

11. A method of producing a powdery and/or granular material for thermosetting resin, the method comprising:
i) adding a resin (B) to an aqueous latex that contains fine polymer particles (A);
ii) preparing, with use of the aqueous latex obtained in step i), an agglutinate that contains the fine polymer particles (A) and the resin (B); and
iii) collecting the agglutinate, wherein
the fine polymer particles (A) include a graft part which is a polymer containing structural units derived from at least one type of monomer selected from the group consisting of aromatic vinyl monomers, vinyl cyanide monomers, and (meth)acrylate monomers,
the resin (B) has a viscosity, measured in accordance with the description, of not more than 1,000,000 mPa·s at 25°C, and
the fine polymer particles (A) are contained in an amount of 70 weight% to 99 weight% and the resin (B) is contained in an amount of 1 weight% to 30 weight%, where 100 weight% represents a total amount of the fine polymer particles (A) and the resin (B),
wherein the fine polymer particles (A) have a core-shell structure including a core layer and a shell layer; and
the fine polymer particles (A) include, in the core layer, a polymer that contains at least one type of monomer unit selected from the group consisting of diene-based rubbers, (meth)acrylate-based rubbers, and organosiloxane-based rubbers.

12. A method of producing a resin composition, comprising the step of mixing (i) a powdery and/or granular material for thermosetting resin, produced by a method according to claim 11, and (ii) a thermosetting matrix resin (C).

## Patentansprüche

1. Pulveriges und/oder körniges Material für warmaushärtendes Harz, aufweisend:
feine Polymerpartikel (A) mit einem Pfropfpolymer, wobei das Polymer mindestens einen Typ einer Monomer-Einheit aufweist, der aus der Gruppe ausgewählt ist, die aus aromatischen Vinyl-Monomeren, Vinylcyanid-Monomeren und (Meth)acrylat-Monomeren besteht; und
ein Harz (B), das eine Viskosität von nicht mehr als 1.000.000 mPa*s bei 25°C hat, gemessen gemäß der Beschreibung,
wobei die feinen Polymerpartikel (A) in einer Menge von 70 Gewichtsprozent bis 99 Gewichtsprozent enthalten sind, und das Harz (B) in einer Menge von 1 Gewichtsprozent bis 30 Gewichtsprozent enthalten ist, wobei 100 Gewichtsprozent eine Gesamtmenge der feinen Polymerpartikel (A) und des Harzes (B) repräsentiert,
die feinen Polymerpartikel (A) eine Kern-Mantel-Struktur haben, die eine Kernschicht und eine Mantelschicht aufweist; und
die feinen Polymerpartikel (A) in der Kernschicht ein Polymer aufweisen, das mindestens einen Typ einer Monomer-Einheit enthält, der aus der Gruppe ausgewählt ist, die aus dienbasierten Gummis, (meth)acrylat-basierten Gummis und organosiloxan-basierten Gummis besteht.

2. Pulveriges und/oder körniges Material nach Anspruch 1, wobei das Harz (B) ein Harz ist, dessen Differentielle-Scanning-Kalorimetrie (DSC) Thermogramm einen endothermen Höchstwert bei 25°C oder darunter zeigt, gemessen gemäß der Beschreibung.

3. Pulveriges und/oder körniges Material nach Anspruch 1 oder 2, wobei das Harz (B) ein warmaushärtendes Harz enthält.

4. Pulveriges und/oder körniges Material nach Anspruch 1 oder 2, wobei das Harz (B) ein thermoplastisches Harz enthält.

5. Pulveriges und/oder körniges Material nach einem der Ansprüche 1 bis 4, wobei die Anzahl von Domänen nicht mehr als 5 ist, gemessen mittels Transmissionselektronenmikroskopie (TEM) unter Verwendung einer Technik gemäß der Beschreibung, wobei die Domänen solche Domänen sind, in denen jeweils eine Längendimension des Harzes (B) nicht weniger als das 1,5-fache einer durchschnittlichen Partikelgröße der feinen Polymerpartikel (A) ist.

6. Pulveriges und/oder körniges Material nach einem der Ansprüche 1 bis 5, wobei: die feinen Polymerpartikel (A) eine Zwischenschicht zwischen der Kernschicht und der Mantelschicht aufweisen; und die Zwischenschicht eine oberflächenvernetzte Gummischicht aufweist.

7. Pulveriges und/oder körniges Material nach einem der Ansprüche 1 bis 6, ferner aufweisend ein Antiblockierung-Agens in einer Menge von 0,01 Gewichtsprozent bis 5,0 Gewichtsprozent.

8. Harzzusammensetzung aufweisend:
ein pulveriges und/oder körniges Material für warmaushärtendes Harz nach einem der Ansprüche 1 bis 7; und
ein warmaushärtendes Matrixharz (C).

9. Harzzusammensetzung nach Anspruch 8, wobei das warmaushärtende Matrixharz (C) mindestens eines ist, das aus der Gruppe ausgewählt ist, die aus ethylen-ungesättigten Monomeren, Epoxidharzen, Phenolharzen, Polyol-Harzen und Amino-Formaldehyd-Harzen besteht.

10. Ausgehärtetes Produkt, das durch Aushärten einer Harzzusammensetzung nach Anspruch 8 oder 9 hergestellt ist.

11. Verfahren zur Herstellung eines pulverigen und/oder körnigen Materials für warmaushärtendes Harz, wobei das Verfahren aufweist:
i) Zugabe eines Harzes (B) zu einem wässrigen Latex, der feine Polymerpartikel (A) enthält;
ii) Erzeugen eines Agglutinats, das die feinen Polymerpartikel (A) und das Harz (B) enthält, unter Verwendung des in Schritt i) gewonnenen wässrigen Latex; und
iii) Sammeln des Agglutinats, wobei
die feinen Polymerpartikel (A) einen Pfropfteil aufweisen, der ein Polymer ist, das strukturelle Einheiten enthält, die von mindestens einem Monomer-Typ abgeleitet sind, der aus der Gruppe ausgewählt ist, die aus aromatischen Vinyl-Monomeren, Vinylcyanid-Monomeren und (Meth)acrylat-Monomeren besteht,
das Harz (B) eine Viskosität von nicht mehr als 1.000.000 mPa*s bei 25°C hat, gemessen gemäß der Beschreibung, und
die feinen Polymerpartikel (A) in einer Menge von 70 Gewichtsprozent bis 99 Gewichtsprozent enthalten sind, und das Harz (B) in einer Menge von 1 Gewichtsprozent bis 30 Gewichtsprozent enthalten ist, wobei 100 Gewichtsprozent eine Gesamtmenge der feinen Polymerpartikel (A) und des Harzes (B) repräsentiert,
wobei die feinen Polymerpartikel (A) eine Kern-Mantel-Struktur haben, die eine Kernschicht und eine Mantelschicht aufweist; und
die feinen Polymerpartikel (A) in der Kernschicht ein Polymer aufweisen, das mindestens einen Typ einer Monomer-Einheit enthält, der aus der Gruppe ausgewählt ist, die aus dienbasierten Gummis, (meth)acrylat-basierten Gummis und organosiloxan-basierten Gummis besteht.

12. Verfahren zur Herstellung einer Harzkomposition, aufweisend den Schritt: Mischen (i) eines durch ein Verfahren nach Anspruch 11 hergestellten pulvrigen und/oder körnigen Materials für warmaushärtendes Harz und (ii) eines warmaushärtenden Matrixharzes (C).

## Revendications

1. Matériau pulvérulent et/ou granulaire pour résine thermodurcissable, comprenant :
des particules fines de polymère (A) dans lesquelles un polymère est greffé, le polymère contenant au moins un type de motif monomère choisi dans le groupe constitué de monomères vinyliques aromatiques, de monomères de cyanure de vinyle et de monomères de (méth)acrylate ; et
une résine (B) ayant une viscosité, mesurée selon la description, d'au plus 1 000 000 mPa.s à 25 °C,
dans lequel les particules fines de polymère (A) sont présentes en une quantité de 70 % en poids à 99 % en poids et la résine (B) est contenue en une quantité de 1 % en poids à 30 % en poids, où 100 % en poids représente une quantité totale des particules fines de polymère (A) et de la résine (B),
les particules fines de polymère (A) ont une structure coeur-écorce comprenant une couche de coeur et une couche d'écorce ; et
les particules fines de polymère (A) comprennent, dans la couche de coeur, un polymère qui contient au moins un type de motif monomère choisi dans le groupe constitué de caoutchoucs à base de diène, de caoutchoucs à base de (méth)acrylate et de caoutchoucs à base d'organosiloxane.

2. Matériau pulvérulent et/ou granulaire selon la revendication 1, dans lequel la résine (B) est une résine dont le thermogramme de calorimétrie différentielle à balayage (DSC) présente un pic endothermique, mesuré selon la description, à 25 °C ou au-dessous.

3. Matériau pulvérulent et/ou granulaire selon la revendication 1 ou 2, dans lequel la résine (B) contient une résine thermodurcissable.

4. Matériau pulvérulent et/ou granulaire selon la revendication 1 ou 2, dans lequel la résine (B) contient une résine thermoplastique.

5. Matériau pulvérulent et/ou granulaire selon l'une quelconque des revendications 1 à 4, dans lequel le nombre de domaines mesurés par microscopie électronique à transmission (MET), au moyen d'une technique selon la description, n'est pas supérieur à cinq, les domaines étant des domaines dans chacun desquels une dimension longitudinale de la résine (B) est au moins 1,5 fois la taille moyenne des particules des particules fines de polymère (A).

6. Matériau pulvérulent et/ou granulaire selon l'une quelconque des revendications 1 à 5, dans lequel : les particules fines de polymère (A) comprennent une couche intermédiaire entre la couche de coeur et la couche d'enveloppe ; et la couche intermédiaire contient une couche de caoutchouc réticulée en surface.

7. Matériau pulvérulent et/ou granulaire selon l'une quelconque des revendications 1 à 6, comprenant en outre un agent antiadhésion en une quantité de 0,01 % en poids à 5,0 % en poids.

8. Composition de résine comprenant :
un matériau pulvérulent et/ou granulaire pour résine thermodurcissable selon l'une quelconque des revendications 1 à 7 ; et
une résine matricielle thermodurcissable (C).

9. Composition de résine selon la revendication 8, dans laquelle la résine matricielle thermodurcissable (C) est au moins l'une choisie dans le groupe constitué de monomères éthyléniquement insaturés, de résines époxy, de résines phénoliques, de résines polyol et de résines amino-formaldéhyde.

10. Produit durci qui est produit en durcissant une composition de résine selon la revendication 8 ou 9.

11. Procédé de production d'un matériau pulvérulent et/ou granulaire pour résine thermodurcissable, le procédé comprenant :
i) l'ajout d'une résine (B) à un latex aqueux qui contient des particules fines de polymère (A) ;
ii) la préparation, à l'aide du latex aqueux obtenu à l'étape i), d'un agglutinat qui contient les particules fines de polymère (A) et la résine (B) ; et
iii) la collecte de l'agglutinat, dans lequel
les particules fines de polymère (A) comprennent une partie greffée qui est un polymère contenant des motifs structurels dérivés d'au moins un type de monomère choisi dans le groupe constitué des monomères vinyliques aromatiques, de monomères de cyanure de vinyle et de monomères de (méth)acrylate,
la résine (B) a une viscosité, mesurée selon la description, d'au plus 1 000 000 mPa.s à 25 °C, et
les particules fines de polymère (A) sont présentes en une quantité de 70 % en poids à 99 % en poids et la résine (B) est contenue en une quantité de 1 % en poids à 30 % en poids, où 100 % en poids représente une quantité totale des particules fines de polymère (A) et de la résine (B),
dans lequel les particules fines de polymère (A) ont une structure coeur-écorce comprenant une couche de coeur et une couche d'écorce ; et
les particules fines de polymère (A) comprennent, dans la couche de coeur, un polymère qui contient au moins un type de motif monomère choisi dans le groupe constitué de caoutchoucs à base de diène, de caoutchoucs à base de (méth)acrylate et de caoutchoucs à base d'organosiloxane.

12. Procédé de production d'une composition de résine, comprenant l'étape de mélange de (i) un matériau pulvérulent et/ou granulaire pour résine thermodurcissable, produit par un procédé selon la revendication 11, et (ii) une résine matricielle thermodurcissable (C).
